# EUROPEAN PATENT APPLICATION

(11) **EP 4 836 334 A1**
(43) Date of publication of application: **04.11.2026**
(21) Application number: 24914870.1
(22) Date of filing: 03.09.2024
(51) Int. Cl.: H04L 1/1812

(54) **DATA TRANSMISSION METHOD, APPARATUS, AND STORAGE MEDIUM**

(30) Priority: 02.01.2024 CN 202410011721
(71) Applicant: ZTE Corporation, Shenzhen, Guangdong 518057 (CN)
(72) Inventor: TANG, Hong, Shenzhen, Guangdong 518057 (CN); XU, Jun, Shenzhen, Guangdong 518057 (CN); DAI, Bo, Shenzhen, Guangdong 518057 (CN); CHEN, Mengzhu, Shenzhen, Guangdong 518057 (CN); XU, Jiajun, Shenzhen, Guangdong 518057 (CN); DAI, Jianqiang, Shenzhen, Guangdong 518057 (CN); MA, Xiaoying, Shenzhen, Guangdong 518057 (CN); ZHAO, Wei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/116571
(87) International publication number: WO 2025/145648

(57) **Abstract**

Provided are a data transmission method, an apparatus, and a storage medium. The data transmission method comprises: a first node transmits first indication information indicating a data transmission type; and the first node transmits data with a second node on the basis of the first indication information.

## Description

The present disclosure claims priority to Chinese Patent Application No. 202410011721.6 filed on January 2, 2024, the entire contents of which are incorporated herein by reference.

### TECHNICAL FIELD

The present disclosure relates to the technical field of communications, and in particular, to a data transmission method, an apparatus, and a storage medium.

### BACKGROUND

In 5th generation new radio (5G NR) systems, to process data transmission under a large bandwidth and reduce implementing complexity, a transport block (TB) is divided into a plurality of small code blocks (CBs), and a number of bits of each CB does not exceed a threshold. If a CB in the TB is decoded incorrectly, the entire TB will be retransmitted, thereby resulting in a large amount of invalid transmission during retransmission, and further affecting system efficiency.

### SUMMARY

In an aspect, the embodiments of the present disclosure provide a data transmission method, applied to a first node. The data transmission method includes:
transmitting first indication information indicating a data transmission type; and
performing data transmission with a second node based on the first indication information.

In another aspect, the embodiments of the present disclosure provide a data transmission method, applied to a second node. The data transmission method includes:
receiving first indication information indicating a data transmission type; and
performing data transmission with a first node based on the first indication information.

In yet another aspect, the embodiments of the present disclosure provide a data transmission apparatus, applied to a first node. The data transmission apparatus includes: a communication module,
the communication module is configured to transmit first indication information indicating a data transmission type; and
the communication module is further configured to perform data transmission with a second node based on the first indication information.

In yet another aspect, the embodiments of the present disclosure provide a data transmission apparatus, applied to a second node. The data transmission apparatus includes: a communication module,
the communication module is configured to receive first indication information indicating a data transmission type; and
the communication module is further configured to perform data transmission with a first node based on the first indication information.

In yet another aspect, the embodiments of the present disclosure provide a communication apparatus. The communication apparatus includes: a memory and a processor; the memory and the processor are coupled; the memory is configured to store computer program instructions executable by the processor; the processor, upon executing the computer program instructions, implements the data transmission method of any one of the above aspects.

In yet another aspect, the embodiments of the present disclosure provide a computer-readable storage medium, where the computer-readable storage medium stores computer program instructions, and the computer program instructions, upon being executed on a computer (e.g., a communication apparatus or a signal transmission apparatus), implement the data transmission method of any one of the above aspects.

In yet another aspect, the embodiments of the present disclosure provide a computer program product, where the computer program product includes computer program instructions, and the computer program instructions, upon being executed, implement the data transmission method of any one of the above aspects.

### BRIEF DESCRIPTION OF THE DRAWINGS

FIG. 1 is a statistical chart of probability of a number of erroneous CBGs under different TB error probabilities when one TB is divided into eight CBGs according to some embodiments.
FIG. 2 is a schematic diagram of an LRC coding according to some embodiments.
FIG. 3 is a schematic diagram of an architecture of a communication system according to some embodiments.
FIG. 4 is an interaction flowchart of a data transmission method according to some embodiments.
FIG. 5 is a schematic diagram of a data transmission process according to some embodiments.
FIG. 6 is a schematic diagram of another data transmission process according to some embodiments.
FIG. 7 is a schematic diagram of yet another data transmission process according to some embodiments.
FIG. 8 is a schematic diagram of yet another data transmission process according to some embodiments.
FIG. 9 is a schematic diagram of yet another data transmission process according to some embodiments.
FIG. 10 is a schematic diagram of yet another data transmission process according to some embodiments.
FIG. 11 is a schematic diagram of yet another data transmission process according to some embodiments.
FIG. 12 is a schematic diagram of yet another data transmission process according to some embodiments.
FIG. 13 is a schematic diagram of yet another data transmission process according to some embodiments.
FIG. 14 is a schematic diagram of yet another data transmission process according to some embodiments.
FIG. 15 is a schematic diagram of yet another data transmission process according to some embodiments.
FIG. 16 is a schematic diagram of yet another data transmission process according to some embodiments.
FIG. 17 is a schematic diagram of yet another data transmission process according to some embodiments.
FIG. 18 is a schematic diagram of yet another data transmission process according to some embodiments.
FIG. 19 is a schematic diagram of yet another data transmission process according to some embodiments.
FIG. 20 is a schematic diagram of HARQ-ACK feedback information according to some embodiments.
FIG. 21 is a schematic diagram of another HARQ-ACK feedback information according to some embodiments.
FIG. 22 is a schematic diagram of yet another HARQ-ACK feedback information according to some embodiments.
FIG. 23 is a schematic diagram of yet another HARQ-ACK feedback information according to some embodiments.
FIG. 24 is a schematic diagram of yet another HARQ-ACK feedback information according to some embodiments.
FIG. 25 is a schematic diagram of yet another HARQ-ACK feedback information according to some embodiments.
FIG. 26 is a schematic diagram of yet another HARQ-ACK feedback information according to some embodiments.
FIG. 27 is a schematic diagram of yet another data transmission process according to some embodiments.
FIG. 28 is a schematic diagram of yet another data transmission process according to some embodiments.
FIG. 29 is a schematic diagram of yet another data transmission process according to some embodiments.
FIG. 30 is a schematic diagram of yet another data transmission process according to some embodiments.
FIG. 31 is a schematic diagram of yet another HARQ-ACK feedback information according to some embodiments.
FIG. 32 is a schematic diagram of yet another HARQ-ACK feedback information according to some embodiments.
FIG. 33 is a schematic diagram of yet another HARQ-ACK feedback information according to some embodiments.
FIG. 34 is a schematic diagram of yet another HARQ-ACK feedback information according to some embodiments.
FIG. 35 is a schematic diagram of yet another HARQ-ACK feedback information according to some embodiments.
FIG. 36 is a structural schematic diagram of a data transmission apparatus according to some embodiments.
FIG. 37 is a structural schematic diagram of another data transmission apparatus according to some embodiments.
FIG. 38 is a structural schematic diagram of a communication apparatus according to some embodiments.

### DETAILED DESCRIPTION

The technical solutions in the embodiments of the present disclosure will be clearly and completely described below with reference to the drawings in the embodiments of the present disclosure. Apparently, the described embodiments are merely a part of the embodiments of the present disclosure, rather than all of the embodiments. Based on the embodiments in the present disclosure, all other embodiments obtained by those of ordinary skill in the art without creative effort shall fall within the protection scope of the present disclosure.

In the description of the present disclosure, unless otherwise indicated, "/" means "or", for example, A/B may represent A or B. Herein, "and/or" merely describes an association relationship of associated objects, indicating that three relationships may exist, for example, A and/or B may represent: only A, only B, and both A and B. In addition, "at least one" refers to one or more, and "plurality of/multiple" refers to two or more. Expressions such as "first" and "second" do not limit the quantity and execution order, and the expressions "first", "second", etc. do not necessarily mean the defined objects are different.

It should be noted that in the present disclosure, expressions such as "exemplarily" or "for example" are used to indicate an example, illustration, or explanation. Any embodiment or design solution described as "exemplarily" or "for example" in the present disclosure should not be construed as being more preferred or more advantageous than other embodiments or design solutions. Exactly, the usage of expressions such as "exemplarily" or "for example" is intended to present the relevant concepts in a detailed manner.

Compared with a long term evolution (LTE) system, the bandwidth of 5G NR system is significantly larger, and thus the TB will also be very large when data transmission is scheduled under a large bandwidth. To reduce implementation complexity, in practical applications, the input bit length of an encoder is limited to a certain extent. If a number of bits contained in one TB exceeds a threshold, the TB will be segmented to obtain a plurality of small CBs, and each CB does not exceed the threshold.

In NR systems, for base graph 1 (BG1) of low density parity check (LDPC) codes, the threshold for LDPC code block segmentation is 8448, and for base graph 2 (BG2), the threshold for LDPC code block segmentation is 3840. One TB is segmented into a plurality of CBs. If one CB in the TB is decoded incorrectly, according to the processing method in LTE, the entire TB will be retransmitted, which may cause a large amount of invalid transmission during retransmission, thereby affecting system efficiency.

To avoid unnecessary retransmission of successfully decoded CBs and considering the problem of excessively high HARQ-ACK overhead caused by introducing HARQ-ACK feedback for each CB, one TB is divided into N CBGs, and each CBG consists of one or more CBs. Each CBG may use 1-bit HARQ-ACK feedback information. When all CBs in one CBG are correctly decoded, a 1-bit ACK associated with the CBG is fed back. Otherwise, a 1-bit NACK will be fed back, and the CBG needs to be retransmitted. Such CBG-based HARQ-ACK feedback can balance retransmission efficiency and feedback overhead by configuring the CBG size.

In the relevant protocols, when a certain serving sector is configured with a higher-layer parameter PDSCH-codeBlockGroupTransmission, the serving sector will enable CBG transmission, and indicate a maximum number of CBGs supported per TB through the higher-layer parameter maxCodeBlockGroupsPerTransportBlock. Currently, the candidate values of the maximum number of CBGs specified in 38.331 are 2, 4, 6, and 8.

A base station side delivers control information to a terminal device (user equipment, UE) via a physical downlink control channel (PDCCH). The UE receives DCI format 1_1 information related to CBG transmission, including a new data indicator (NDI) field, a code block group transmission information (CBGTI) field, and a code block group flush out information (CBGFI) field. The NDI field in the DCI is 1 bit, used to identify whether the data is a new transmission or a retransmission; the bit width of the CBGTI field is *N_{TB}* · *N,N_{TB}* is determined by the higher-layer parameter maxNrofCodeWordsScheduledByDCI, *N* is determined according to maxCodeBlockGroupsPerTransportBlock. If *N_{TB}*=2, N may be up to 4, the first N bits in the CBGTI field correspond to one TB, and the last N bits correspond to another TB; the first M bits in the CBGTI field correspond to the first M CBGs in the TB in a one-to-one manner, representing CBG0, CBG1, ..., CBGM from the most significant bit to the least significant bit, respectively.

For initial transmission, the NDI indicates new transmission, the CBGTI indicates that all CBGs in the TB are transmitted, and bit positions of the corresponding CBG in the TB are set to 1; during retransmission, the NDI indicates retransmission, the CBGTI indicates only the retransmitted CBGs, and the bit positions of the retransmitted CBGs are set to 1. CBGFI is CBG flush out information with a size of 1 bit. If CBGFI is set to 0, it indicates that the previously received CBG information is contaminated and cannot be combined with the retransmitted CBGs, and the buffer needs to be cleared; if CBGFI is set to 1, it indicates that the retransmitted CBGs can be combined with the previously received CBG information.

When the UE receives a CBG-based transmission, it needs to determine a number M of CBGs of each received TB block, M=min(N, C). N is a maximum number of CBGs per TB block, configured by higher-layer signaling maxCodeBlockGroupsPerTransportBlock, and C is a number of CB blocks in the TB. If M is equal to C, then each CBG contains one CB; if M is not equal to C, the a of CBs in each CBG is determined through the following process.

First, define $K 1 = \left⌈\frac{C}{M}\right⌉ , K 2 = \left⌊\frac{C}{M}\right⌋ ,$, M1=mod(C, M), and determine a number of CBGs and a number of CBs contained in a CBG in the following manner.
(1) For CBG m, it contains CBs with indices mK₁+k, k=0, 1, 2, ..., K₁-1, m=0, 1, 2, ..., M₁-1.
(2) For CBG m, it contains CBs with indices M₁K₁+(m-M₁)K₂+k, m=M₁, M₁+1, M₁+2, ..., M, k=0, 1, 2, ..., K₂-1.

After performing CBG division, determine a number of HARQ-ACK bits corresponding to the CBG in one TB block ${N}_{HARQ - ACK}^{CBG / TB} = M$, and the HARQ-ACK codebook contains ${N}_{HARQ - ACK}^{CBG / TB , max}$ HARQ-ACK bits. If ${N}_{HARQ - ACK}^{CBG / TB} < {N}_{HARQ - ACK}^{CBG / TB , max}$, ${N}_{HARQ - ACK}^{CBG / TB , max}$ is a maximum number of CBGs per TB block, configured by the higher-layer parameter maxCodeBlockGroupsPerTransportBlock, at this time, the last ${N}_{HARQ - ACK}^{CBG / TB , max} - {N}_{HARQ - ACK}^{CBG / TB}$ HARQ-ACK information bit positions of the HARQ-ACK codebook need to be assigned as NACK.

If all CB blocks in a certain CBG are received correctly, the UE will generate ACK at the HARQ-ACK feedback information bit position corresponding to the CBG; if a certain CB block in a certain CBG is received incorrectly, the UE will generate NACK at the HARQ-ACK feedback information bit position corresponding to the CBG. For reception of two TBs, the HARQ-ACK feedback information bits of the second TB are concatenated after the HARQ-ACK feedback information bits of the first TB. In addition, to address a false alarm, for example, each CBG in the TB is correctly detected by the UE but the TB cyclic redundancy check (CRC) detection is erroneous, the UE generates a NACK for each CBG in the HARQ-ACK codebook and feeds back the NACK to the base station.

Exemplarily, the TB segmentation process is as follows:
Assume that the transmission bits are a₀, a₁, a₂, a₃, ..., a_{A-1}, and the parity check bits are denoted as p₀, p₁, p₂, p₃, ..., p_{L-1}, where A is a payload size and L is a number of check bits. The parity check bits are computed according to the rules of the protocol and appended to the downlink shared channel transport block. When A>3824, set L to 24 bits, and use the generator polynomial g_{CRC24A}(D); otherwise, set L to 16 bits, and use the generator polynomial g_{CRCI6}(D). The bits after CRC attachment are denoted as b₀, b₁, b₂, b₃, ..., b_{B-1}, and B=A+L.${g}_{CRC 24 A} \left(D\right) = \left[{D}^{24}{+ D}^{23}{+ D}^{18}{+ D}^{17}{+ D}^{14}{+ D}^{11}{+ D}^{10}{+ D}^{7}{+ D}^{6}{+ D}^{5}{+ D}^{4}{+ D}^{3}+D+1\right] ,$${g}_{CRC 16} \left(D\right) = \left[{D}^{16}{+ D}^{12}{+ D}^{5}+1\right] .$

If B is greater than the maximum code block length K_{cb}, code block segmentation needs to be performed, and a 24-bit CRC check sequence is added to each code block obtained after segmentation. The output bits of code block segmentation are denoted as cᵣ₀, cᵣ₁, cᵣ₂, cᵣ₃, ..., cr_{(Kr-1)}, where 0≤r<C represents the code block index, and Kᵣ=K represents a number of bits in each code block.
1. Determine the maximum code block length K_{cb}:
   For BG1, the maximum code block length is: K_{cb}=8448.
   For BG2, the maximum code block length is: K_{cb}=3840.
2. Determine the number of code blocks C:
   When B≤K_{cb}, code block segmentation is not required, i.e., the number of code blocks C=1, the code block length B'=B, no CRC is added, and L=0.
   When B>K_{cb}, code block segmentation is required, the number of code blocks C=[B/(K_{cb}-L)], the total transport block length after segmentation is B'=B+C*L, and L=24.
3. Determine the number of bits K in each code block:$K ' = B ' / C ;$

For BG1, K_{b}=22; for BG2, K_{b} needs to be determined according to the size of B: when B>640, K_{b}=10; when B>560, K_{b}=9; when B>192, K_{b}=8; otherwise, K_{b}=6. Then, find the smallest Z value (denoted as Z_{c}) according to the relevant standards, such that K*_{b}* ∗ Z*_{c}* ≥ K' is satisfied, and let K=22Z_{c} (for BG1), or K=10Z_{c} (for BG2).

### 4. Perform code block segmentation and add CRC:

When no segmentation is performed, no CRC is added. When the number of code blocks C>1, the input sequence is divided into segments of equal length according to the number of code blocks. The CRC check sequence is computed for each segment according to the generator polynomial g_{CRC24B}(D), and appended after each segment.

The bit sequence cᵣₖ is computed as follows:

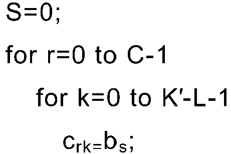

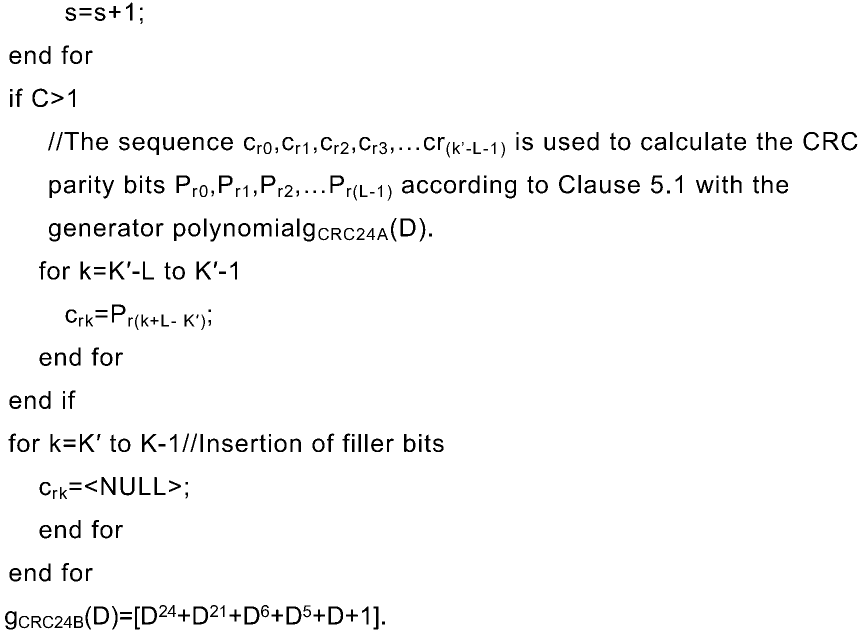

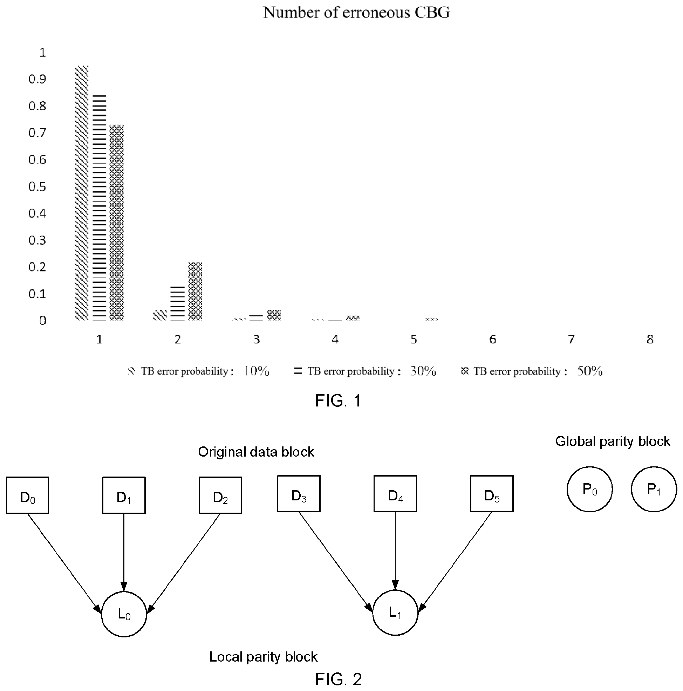

Statistics and theoretical analysis show that, with reference to FIG. 1, in most cases the TB decoding error is caused by decoding errors in one or two of the CBGs. If the entire TB is retransmitted, the transmission efficiency will be affected. To improve retransmission efficiency, using a method of retransmitting part of the CBGs can improve the transmission efficiency.

Upon performing retransmission, a feasible method is to use packet coding operation. Packet coding is a technique of adding redundancy information during data transmission to improve reliability and error correction capability. Common packet coding methods include, for example, Cauchy-based systematic RS (Reed-Solomon) coding, Vandermonde-based RS coding, locally repairable code (LRC) coding, an XOR operation, etc.

For Cauchy-based systematic RS coding, the principle of RS coding is described as follows:
Assume that the number of input source data is $k , D = \left[\begin{matrix}{d}_{1} \\ {d}_{2} \\ ⋮ \\ {d}_{k - 1} \\ {d}_{k}\end{matrix}\right]$, each source data has p bytes, and data after the coding matrix is represented as G*D= $\left[\begin{matrix}{I}_{k} \\ \frac{1}{k + 0} \frac{1}{k + 1} ⋯ \frac{1}{k + k - 1} \\ \frac{1}{k + 1 + 0} \frac{1}{k + 1 + 1} ⋯ \frac{1}{k + 1 + k - 1} \\ \begin{matrix}⋯ & ⋯ & & ⋯ \\ \frac{1}{n - 1 + 0} & \frac{1}{n - 1 + 1} & ⋯ & \frac{1}{n - 1 + k - 1}\end{matrix}\end{matrix}\right] \left[\begin{matrix}{d}_{1} \\ {d}_{2} \\ ⋮ \\ {d}_{k - 1} \\ {d}_{k}\end{matrix}\right] = \left[\begin{matrix}{d}_{1} \\ {d}_{2} \\ ⋮ \\ {d}_{k} \\ {r}_{1} \\ {r}_{2} \\ ⋮ \\ {r}_{m}\end{matrix}\right]$$G = \left[\begin{matrix}{I}_{k} \\ \frac{1}{k + 0} \frac{1}{k + 1} ⋯ \frac{1}{k + k - 1} \\ \frac{1}{k + 1 + 0} \frac{1}{k + 1 + 1} ⋯ \frac{1}{k + 1 + k - 1} \\ \begin{matrix}⋯ & ⋯ & & ⋯ \\ \frac{1}{n - 1 + 0} & \frac{1}{n - 1 + 1} & ⋯ & \frac{1}{n - 1 + k - 1}\end{matrix}\end{matrix}\right]$ is a combination of an identity matrix and a Cauchy matrix. After coding, there are n data, and the number of check data is n-k.

During decoding, for the transmitted n coded symbols, the receiving end receives k coded symbols, and v source symbols are erased, then the number of received source symbols is k-v. Let the index set of received source symbols be {*r*₀,*r*₁,..., *r*_{*k*-1}}, the index set of unreceived source symbols be {*r*₀,*r*₁,..., *r*_{*v*-1}}, and the index set of received check symbols be {*t*_{0,}*t*_{1,}..., *t*_{*v*-1}}. At the receiving end, reconstruct the coding matrix Gₖ, which can be represented as follows: ${G}_{k} \left[\begin{matrix}{I}_{k - v} & 0 \\ A & B\end{matrix}\right]$ $A = \left[\begin{matrix}\frac{1}{{t}_{0} + {r}_{v}} & \frac{1}{{t}_{0} + {r}_{v + 1}} & ⋯ & \frac{1}{{t}_{0} + {r}_{k - 1}} \\ \frac{1}{{t}_{1} + {r}_{v}} & \frac{1}{{t}_{1} + {r}_{v + 1}} & ⋯ & \frac{1}{{t}_{1} + {r}_{k - 1}} \\ ⋯ & ⋯ & ⋯ & ⋯ \\ \frac{1}{{t}_{v - 1} + {r}_{v}} & \frac{1}{{t}_{v - 1} + {r}_{v + 1}} & ⋯ & \frac{1}{{t}_{v - 1} + {r}_{k - 1}}\end{matrix}\right] , B = \left[\begin{matrix}\frac{1}{{t}_{0} + {r}_{0}} & \frac{1}{{t}_{0} + {r}_{1}} & ⋯ & \frac{1}{{t}_{0} + {r}_{v - 1}} \\ \frac{1}{{t}_{1} + {r}_{0}} & \frac{1}{{t}_{1} + {r}_{1}} & ⋯ & \frac{1}{{t}_{1} + {r}_{v - 1}} \\ ⋯ & ⋯ & ⋯ & ⋯ \\ \frac{1}{{t}_{v - 1} + {r}_{0}} & \frac{1}{{t}_{v - 1} + {r}_{1}} & ⋯ & \frac{1}{{t}_{v - 1} + {r}_{v - 1}}\end{matrix}\right]$

Gₖ has a regular format, then the inverse matrix of Gₖ can be calculated through the following formula: ${G}_{k}^{- 1} = \left[\begin{matrix}{I}_{k - v} & 0 \\ 0 & B\end{matrix}\right] \left[\begin{matrix}{I}_{k - v} & 0 \\ - A & {I}_{v}\end{matrix}\right]$ ${B}^{- 1} = {\left[{d}_{i , j}\right]}_{i , j = 0 , 1 , … , v - 1} ,$ ${d}_{i , j} = {\left(-1\right)}^{i + j} \frac{{e}_{j} {f}_{i}}{{a}_{j} {b}_{i} \left({t}_{j}{r}_{i}\right)} ,$ ${a}_{m} = \left\{{\prod }_{i < m} \left({t}_{i}-{t}_{m}\right)\right\} \left\{{\prod }_{i > m} \left({t}_{m}-{t}_{i}\right)\right\}$ ${b}_{m} = \left\{{\prod }_{i < m} \left({r}_{i}-{r}_{m}\right)\right\} \left\{{\prod }_{i > m} \left({r}_{m}-{r}_{i}\right)\right\}$ ${e}_{m} = {\prod }_{i} \left({t}_{m}+{r}_{i}\right)$ ${f}_{m} = {\prod }_{i} \left({t}_{i}+{r}_{m}\right)$

The first formula above is a square matrix of order v; the negative sign in the second formula is not considered in finite field operations.

For Vandermonde-based RS coding, the principle of RS coding is described as follows:
Any square submatrix of a Vandermonde matrix is an invertible matrix. A Vandermonde matrix with m rows and n columns is defined as follows: $\left[\begin{matrix}{a}_{1}^{0} & ⋯ & {a}_{n}^{0} \\ ⋮ & ⋱ & ⋮ \\ {a}_{1}^{m - 1} & ⋯ & {a}_{n}^{m - 1}\end{matrix}\right]$

The 'a's are all different and not equal to 0.
(1) Systematic RS erasure code based on Vandermonde
   First, for the coding process, assume that the dimension of the input data is k (i.e., the number of source symbols is k), and the values of {a₁, a₂, ..., aₙ} are {1, 2, ..., k}, respectively, then the Vandermonde matrix is: $\left[\begin{matrix}1 & ⋯ & 1 \\ ⋮ & ⋱ & ⋮ \\ {1}^{m - 1} & ⋯ & {k}^{m - 1}\end{matrix}\right]$

The coding matrix G of the systematic RS erasure code based on Vandermonde is a combination of an identity matrix I and a Vandermonde matrix V1. The product of the coding matrix G and the input data D is the coded data, as shown below: $\left[\begin{matrix}1 & 0 & 0 & ⋯ & 0 \\ 0 & 1 & 0 & ⋯ & 0 \\ ⋮ & ⋮ & ⋮ & ⋯ & ⋮ \\ 0 & 0 & 0 & ⋯ & 1 \\ 1 & 1 & 1 & ⋯ & 1 \\ 1 & 2 & 3 & ⋯ & k \\ ⋮ & ⋮ & ⋮ & ⋯ & ⋮ \\ {1}^{m - 1} & {2}^{m - 1} & {3}^{m - 1} & ⋯ & {k}^{m - 1}\end{matrix}\right] \left[\begin{matrix}{d}_{1} \\ {d}_{2} \\ ⋮ \\ {d}_{k - 1} \\ {d}_{k}\end{matrix}\right] = \left[\begin{matrix}{d}_{1} \\ {d}_{2} \\ ⋮ \\ {d}_{k} \\ {r}_{1} \\ {r}_{2} \\ ⋮ \\ {r}_{m}\end{matrix}\right]$

The operations between elements in the above formula are all four arithmetic operations in a finite field, and the coding complexity is O(k*m), where k is the dimension of the original data and m is the dimension of the check data.

Then, for the decoding process, Gaussian elimination can be directly performed on the received coding matrix to solve for the original data, or simplified decoding can be performed based on the characteristics of the Vandermonde matrix. Herein, the simplified decoding of the systematic RS erasure code based on Vandermonde will be mainly introduced.

Assume that the coding process is shown in the follow formula, k original data D=[d₁,d₂,...,dₖ]^{T}, and m check data R=[r₁,r₂,...rₘ] generate coded data with a length of k+m, and the coded data is represented as: E=[D^{T},R^{T}]^{T}. $G * D = \left[\begin{matrix}{I}_{k} \\ {V}_{1}\end{matrix}\right] ∗ D = \left[\begin{matrix}1 & 0 & 0 & ⋯ & 0 \\ 0 & 1 & 0 & ⋯ & 0 \\ ⋮ & ⋮ & ⋮ & ⋯ & ⋮ \\ 0 & 0 & 0 & ⋯ & 1 \\ 1 & 1 & 1 & ⋯ & 1 \\ 1 & 2 & 3 & ⋯ & k \\ ⋮ & ⋮ & ⋮ & ⋯ & ⋮ \\ {1}^{m - 1} & {2}^{m - 1} & {3}^{m - 1} & ⋯ & {k}^{m - 1}\end{matrix}\right] \left[\begin{matrix}{d}_{1} \\ {d}_{2} \\ ⋮ \\ {d}_{k - 1} \\ {d}_{k}\end{matrix}\right] = \left[\begin{matrix}{d}_{1} \\ {d}_{2} \\ ⋮ \\ {d}_{k} \\ {r}_{1} \\ {r}_{2} \\ ⋮ \\ {r}_{m}\end{matrix}\right]$

When the coded data E passes through an erasure channel, v original data are erased, then it is necessary to additionally receive v check data. In the case of receiving v additional check data, the erased data can be calculated by the following formula: ${R}_{l} = {R}_{e} - {V}_{1} ′ * {D}_{e}$ ${D}_{r} = {\left({V}_{1}"\right)}^{- 1} * {R}_{l}$

Dₑ represents the received original data; V1' represents a submatrix of the Vandermonde matrix, corresponding to V check matrices; Rₑ represents V check data; V1" represents a submatrix composed of certain columns of V1', the columns corresponding to the positions where the original data are erased.

The Cauchy systematic RS coding or the Vandermonde-based RS coding process is simplified by the formula: $\left[{R}_{1} , {R}_{2} , …{R}_{n - k}\right] = {f}_{1} \left(n, k\right)$

n is a number of coded data, k is a number of original data blocks, Rᵢ (i=1, 2, 3..., n-k) is the output check data.

LRC coding: FIG. 2 shows a schematic diagram of an LRC coding. D₀,..., D₅ are six source data blocks, divided into two local groups. In the first local group, a bitwise XOR operation is performed on D₀, D₁ and D₂ to obtain a local parity block L₀. In the second local group, a bitwise XOR operation is performed on D₃, D₄ and D₅ to obtain a local parity block L₁. P₀ and P₁ are two global parity blocks involving all six source data blocks.

When a single-point fault occurs, for example, D₀ fails, then reading three pieces of data, D₁, D₂ and L₀, can complete the repair of D₀. If it is RS(10, 6) coding, data from six nodes need to be read to complete the data repair.

When a multi-point fault occurs, for example, two node faults occur, regardless of whether the two faults are distributed in a single local group or in two local groups, data from six nodes need to be read to complete the data repair.

The repair sets of the above example can be represented as: $φ 1 \left(1\right) = \left\{{D}_{1}, {D}_{2}, {L}_{0}\right\} φ 1 \left(4\right) = \left\{{D}_{4}, {D}_{5}, {L}_{1}\right\}$ $φ 1 \left(2\right) = \left\{{D}_{0}, {D}_{2}, {L}_{0}\right\} φ 1 \left(5\right) = \left\{{D}_{3}, {D}_{5}, {L}_{1}\right\}$ $φ 1 \left(3\right) = \left\{{D}_{0}, {D}_{1}, {L}_{0}\right\} φ 1 \left(6\right) = \left\{{D}_{3}, {D}_{4}, {L}_{1}\right\}$

If the information indicates that D₀ has failed, it can be recovered using φ1(1), for D₀ the repair locality r=3, and the repair availability t=1. Considering that in more than 98% of failure cases, only one block in a stripe fails, LRC can effectively reduce the cost of data repair, and is a coding scheme that balances storage cost and repair overhead.

However, LRC is not a maximum distance separable (MDS) code. For example, the above (10,6,2) code, although having four parities, cannot correct all four node errors. For example, if the four data blocks D₀, D₁, D₂, L₀ fail, the first three data blocks cannot be recovered through P₀ and P₁.

If a number of source data blocks k is not an integer multiple of a number of local parities r₁, the local parity data blocks are generated in the following manner: the first r1-1 local groups each contain $\left[\frac{k}{r 1}\right]$ source data blocks, and the last local group contains k- $\left(r1-1\right) * \left[\frac{k}{r 1}\right]$ source data blocks. For example, when k =35, r₁ = 4, the first three local groups each contain 9 source data blocks, and the last local group contains 8 data blocks.

The LRC coding process is simplified by the formula: $\left[{L}_{0},{L}_{1},…{Lr}_{1 - 1},{P}_{1},{P}_{2},…{P}_{r 2}\right] = {f}_{2} \left(n,k , r2\right)$

n is the number of coded data blocks n=k+r₂+r₁, k is the number of original data blocks, r₁ is the number of local parity blocks, Lᵢ(i=0, 1, ..., r₁-1) are local parity data blocks, and Pⱼ(j=1, 2, ..., r₂) are global parity data blocks.

XOR operation: assume that the number of bits contained in respecitve CBGs are equal (if not equal, align by padding zeros), for example, four CBGs (A, B, C, D), an XOR operation is performed to obtain a parity block P=A⊕B⊕C⊕D, where ⊕ represents an XOR operation.

When the TB is relatively large, the transmission is performed in a CBG manner, the configured number of CBGs is relatively large, and the number of processes is relatively large, the overall feedback overhead is relatively large, and the retransmission reliability may not be guaranteed.

In view of this, the present disclosure proposes a data transmission method, where a first node transmits first indication information indicating a data transmission type to a second node; and performes data transmission with the second node based on the first indication information. In this way, when the TB is large and the number of CBGs is large, the second node can know the data transmission type earlier, thereby making a judgment and preparing for retransmission more quickly, reducing the feedback overhead and improving the retransmission reliability.

The data transmission method provided by the embodiments of the present disclosure can be applied to systems of various communication standards. For example, the systems to which the data transmission method provided by the embodiments of the present disclosure can be applied include, but are not limited to, LTE systems, various versions evolved based on LTE, 5G systems, and other communication systems. In addition, the data transmission method provided by the embodiments of the present disclosure may also be applicable to future-oriented communication systems (e.g., 6G communication systems) and the like.

In the embodiments of the present disclosure, the network architecture of a mobile communication network (including but not limited to 3G, 4G, 5G, and future mobile communication networks) may at least include a first communication node and a second communication node. It should be understood that, in this example, in downlink, the first communication node may be a network-side device (e.g., including but not limited to a base station), and the second communication node may be a terminal-side device (e.g., including but not limited to a terminal). Certainly, in uplink, the first communication node may also be a terminal-side device, and the second communication node may also be a network-side device. In device-to-device communication where two communication nodes are devices, both the first communication node and the second communication node may be base stations or terminals. The first communication node and the second communication node may be referred to as a first node and a second node for short, respectively.

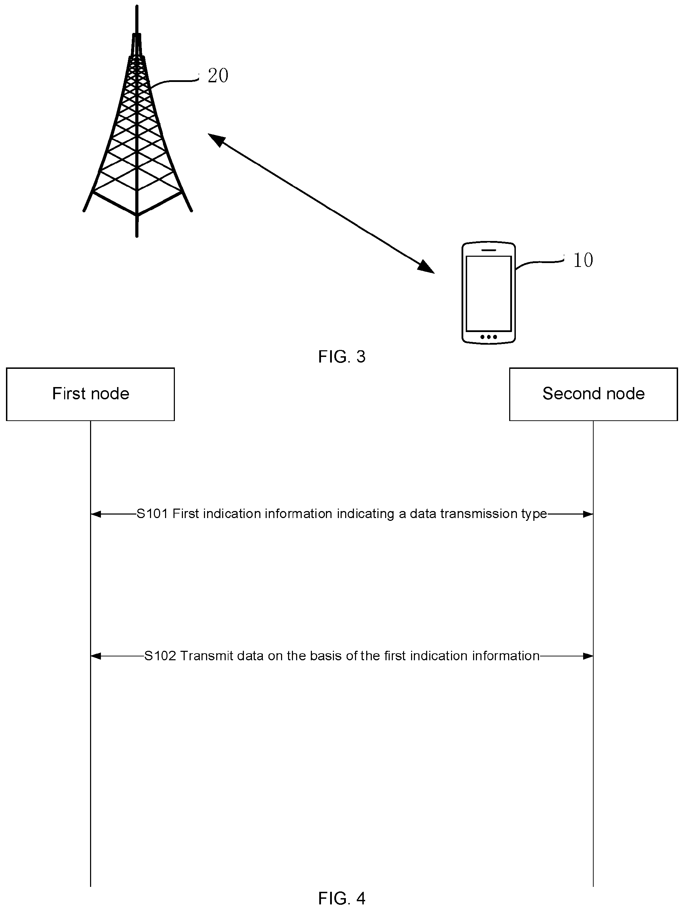

Exemplarily, taking the first communication node being a base station and the second communication node being a terminal as an example, as shown in FIG. 3, a communication system provided by the embodiments of the present disclosure includes a terminal 10 and a base station 20. Numbers of the terminal 10 and the base station 20 may be one or more, and the embodiments of the present disclosure do not limit the number.

In some embodiments, the base station 20 provides wireless access services for the terminal 10. One base station 20 provides at least one service coverage area (which may also be called a cell). The terminal 10 entering the area may communicate with the base station 20 through wireless signals, thereby receiving the wireless access service provided by the base station 20.

In some embodiments, a base station (BS) may be a base station in long term evolution (LTE) or long term evolution advanced (LTE-A), an evolved node B (eNB or eNodeB), a base station device in a 5G network, or a base station in a future communication system, etc. A base station may include various macro base stations, micro base stations, home base stations, radio remote units, reconfigurable intelligent surfaces (RISs), routers, relays, TRPs, wireless fidelity (WiFi) devices, and other network-side devices.

In some embodiments, a terminal may be a device with a wireless transceiving function. The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. A terminal may sometimes also be called a user, a user equipment (UE), an access terminal, a UE unit, a UE station, a mobile station, mobile platform, a remote station, a remote terminal, a mobile device, a UE terminal, a wireless communication device, a UE agent, or a UE apparatus, etc., which is not limited in the embodiments of the present disclosure.

It should be noted that FIG. 3 is only an exemplary framework diagram, the number of devices included in FIG. 3 and the names of each device are not limited, and in addition to the devices shown in FIG. 3, the communication system may also include other devices (e.g., a core network device).

The application scenarios of the embodiments of the present disclosure are not limited. The system architecture and service scenarios described in the embodiments of the present disclosure are for more clearly illustrating the technical solutions of the embodiments of the present disclosure, and do not constitute a limitation on the technical solutions provided by the embodiments of the present disclosure. Those of ordinary skill in the art may know that, with the evolution of network architecture and the emergence of new service scenarios, the technical solutions provided by the embodiments of the present disclosure are also applicable to similar technical problems.

The embodiments of the present disclosure provide a data transmission method. As shown in FIG. 4, the method at least includes S101 to S102:

In S101: a first node transmits first indication information indicating a data transmission type; correspondingly, a second node receives the first indication information indicating the data transmission type sent from the first node.

In some embodiments, the first indication information is transmitted in uplink scheduling information; or, the first indication information is transmitted in downlink scheduling information.

In some embodiments, the first indication information is carried in downlink control information (DCI).

In some embodiments, before the first node transmits the first indication information indicating the data transmission type, the first node receives hybrid automatic repeat request (HARQ-ACK) feedback information sent from the second node; or, after the first node transmits the first indication information indicating the data transmission type, the first node receives hybrid automatic repeat request (HARQ-ACK) feedback information sent from the second node; or, at the same time as the first node transmits the first indication information indicating the data transmission type, the first node receives hybrid automatic repeat request (HARQ-ACK) feedback information sent from the second node.

In some embodiments, the HARQ-ACK feedback information is used to indicate whether a transport block (TB) is transmitted successfully.

In some embodiments, the HARQ-ACK feedback information is used to indicate whether each code block group (CBG) in the TB is transmitted successfully.

In some embodiments, the first indication information includes data retransmission type indication information and/or a CBG indication corresponding to packet coded data.

In some embodiments, the data retransmission type includes at least one of: a first retransmission type, a second retransmission type, a third retransmission type, a fourth retransmission type; the first retransmission type, the second retransmission type, and the third retransmission type correspond to packet coding retransmissions in different manners, and the fourth retransmission type is a retransmission without packet coding.

In some embodiments, the first retransmission type is that the retransmission data includes a retransmission packet obtained through an XOR operation between data; the second retransmission type is that the retransmission data includes a retransmission packet obtained through an RS coding operation on the data; the third retransmission type is that the retransmission data includes a retransmission packet obtained through an LRC coding operation on the data; the fourth retransmission type is that the retransmission data includes a retransmitted CBG or TB.

The retransmission packet includes a parity packet (or a parity block), an XOR packet, or a other defined data packet.

Exemplarily, the base station may indicate the data retransmission type in one of the following manners:

(1) Indication through a newly added field in the DCI, with a field size of 2 bits, for example: 00 is used to indicate the first retransmission type, 01 is used to indicate the second retransmission type, 10 is used to indicate the third retransmission type, and 11 is used to indicate the fourth retransmission type.

(2) Indication through CBGTI in the DCI, where the CBGTI indication state is other than the all-0 or all-1 state. For example: for four CBGs, during retransmission indication, a bit indication bit of 1000 in the CBGFI indicates the first retransmission type, a bit indication bit of 0100 in the CBGFI indicates the second retransmission type, and a bit indication bit of 0010 in the CBGFI indicates the third retransmission type.

(3) Joint indication through CBGFI and CBGTI in the DCI, for example, setting CBGFI to 0, and the CBGTI indication state being other than the all-0 or all-1 state. For example: CBGFI is set to 0, indicating a retransmission packet. A bit indication bit of 1000 in CBGFI indicates the first retransmission type, a bit indication bit of 0100 in CBGFI indicates the second retransmission type, and a bit indication bit of 0010 in CBGFI indicates the third retransmission type.

(4) RRC reconfiguration, including a data retransmission type, and further may include CBG information. The CBG information includes the detailed position of the CBG that fails to be transmitted in the TB.

In some embodiments, the CBG indication corresponding to the packet coded data includes at least one of:
all CBGs in the TB;
the first half of the CBGs in the TB;
the second half of the CBGs in the TB;
the first half of the CBGs in the TB and the second half of the CBGs in the TB; or
selecting a part of CBGs in the TB to performing a packet coding operation according to indices and an interval of respecitve CBGs in the TB, to obtain a retransmission packet. The interval is used to represent the absolute value of the difference between indices of two adjacent CBGs among the selected part of CBGs.

In some embodiments, a CBG that fails to be transmitted in the TB belongs to the first half of the CBGs in the TB, and the CBG indication corresponding to the packet coded data is all CBGs in the TB.

In S102: the first node and the second node perform data transmission based on the first indication information.

In some embodiments, based on the first indication information, the first node transmits data to the second node; or, based on the first indication information, the first node receives data transmitted from the second node.

In some embodiments, the first node performs a packet coding operation on at least one CBG including the CBG that fails to be transmitted, to obtain a retransmission packet; the first node sends the retransmission packet to the second node.

In some embodiments, the second node decodes the retransmission data according to the first indication information, and obtains the CBG that fails to be transmitted based on the correctly detected CBG in the previous transmission and the retransmission data.

In implementation 1, taking an example where the maximum number of CBGs configured by a higher-layer parameter (the maximum number of CBGs configured by the higher-layer parameter is denoted as maxCodeBlockGroupsPerTransportBlock) is 4, the TB transmitted by the current process has 8 CBs, which are divided into 4 CBGs, i.e., CBG0, CBG1, CBG2, CBG3, and each CBG contains 2 CBs. During the initial transmission (the initial transmission is denoted as INITIAL TRANSMISSION), the value of the CBGTI field in DCI 1-1 is [1111], the NDI indicates new transmission data, and the current HARQ-ACK process number. The UE side receives signals of the control channel and the shared channel, and performs decoding on the transport block. When only CB2 is a CB with a decoding error or CB2 is a CB with a CRC detection error (a CB with a decoding error or a CB with a CB CRC detection error is denoted as FAILED CB), the HARQ-ACK feedback of this CBG1 is NACK. Based on this process, the HARQ-ACK feedback information of all CBGs is fed back as [ANAA] to the base station as an example.

Assuming that the CBG indication corresponding to the packet coded data is all CBGs in the TB transmitted by the current process, after the base station successfully receives the HARQ-ACK feedback information of this process, the detailed operations performed by the base station and the terminal may refer to example 1 or example 2.

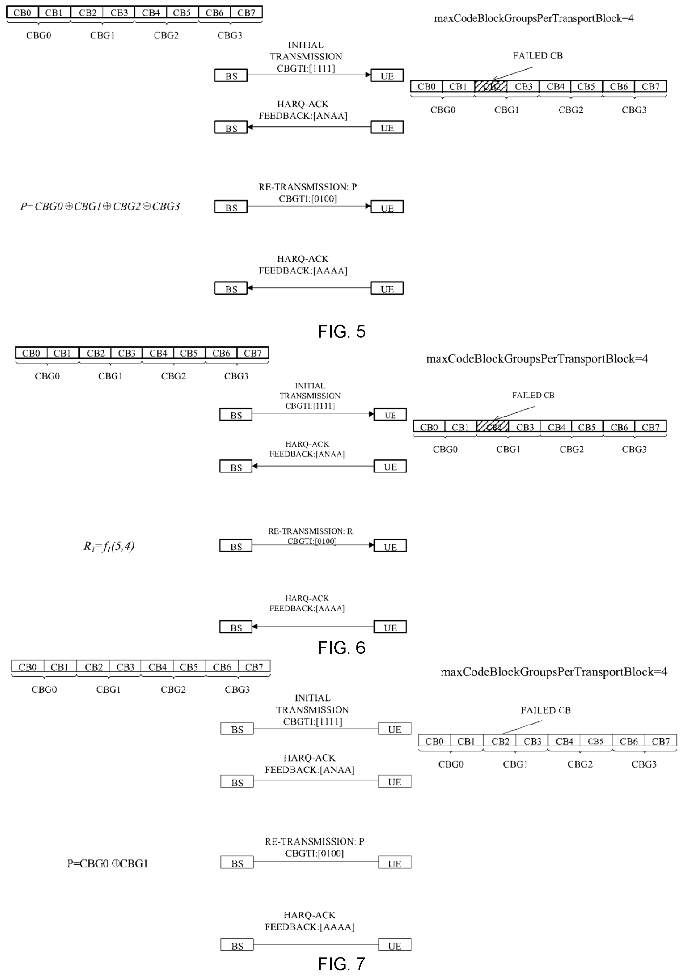

Example 1, as shown in FIG. 5, the base station performs an XOR operation on all CBG blocks (if the numbers of bits are not equal, align by padding zeros) to obtain a parity block P (P=CBG0⊕CBG1⊕CBG2⊕CBG3), and transmits the parity block P and the code block group transmission information CBGTI to the UE (denoted as RE-TRANSMISSION: P and CBGTI[0100]); the UE detects the parity block. If the detection is correct, an XOR operation is performed according to the correctly detected CBG0, CBG2, and CBG3 block information in the previous transmission to obtain the CBG1 block information, and HARQ-ACK feedback information [AAAA] is fed back to the base station.

Example 2, as shown in FIG. 6, the base station performs an RS coding operation on all CBG blocks (if the numbers of bits are not equal, align by padding zeros) to obtain a parity block R1 (R1=f1 (5,4)), and transmits the parity block R1 and the code block group transmission information CBGTI to the UE (denoted as RE-TRANSMISSION: R1 and CBGTI[0100]); the UE detects the parity block. If the detection is correct, RS decoding is performed together according to the correctly detected CBG0, CBG2, and CBG3 block information in the previous transmission to obtain the CBG1 block information, and HARQ-ACK feedback information [AAAA] is fed back to the base station.

In some embodiments, the CBG that fails to be transmitted in the TB belongs to the first half of the CBGs in the TB, and the CBG indication corresponding to the packet coded data is the first half of the CBGs in the TB.

Continuing the description in example 1, since CBG1 belongs to the first half of the CBGs in the TB transmitted by the current process, assuming that the CBG indication corresponding to the packet coded data is the first half of the CBGs in the TB, after the base station successfully receives the HARQ-ACK feedback information of this process, the detailed operations performed by the base station and the terminal may refer to example 3 or example 4.

Example 3, as shown in FIG. 7, the base station, according to the HARQ-ACK feedback information, needs to retransmit CBG1. CBG1 is in the first half of the CBGs. The first half CBG blocks CBG0 and CBG1 (if the numbers of bits are not equal, align by padding zeros) are subjected to an XOR operation to obtain a parity block P (P=CBG0⊕CBG1), and the parity block P and the code block group transmission information CBGTI are transmitted to the UE (denoted as RE-TRANSMISSION: P and CBGTI[0100]). The NDI in the DCI is toggled compared with that of the last time for the same process. The UE detects the parity block. If the detection is correct, an XOR operation is performed based on the correctly detected CBG0 block information in the previous transmission to obtain the CBG1 block information, and HARQ-ACK feedback information [AAAA] is fed back to the base station.

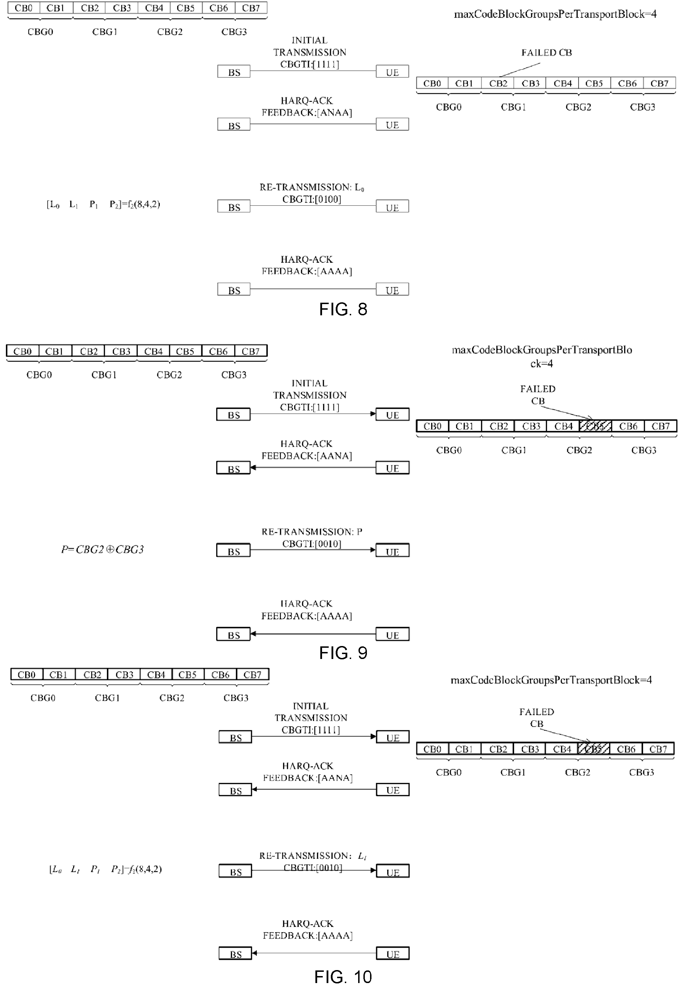

Example 4, as shown in FIG. 8, the base station divides all CBG blocks into 2 local groups, respectively including the first half of the CBGs in the TB and the second half of the CBGs in the TB, with 2 CBGs in each local group; LRC coding is performed on the first half of the CBGs in the TB to obtain a local parity block L0, and LRC coding is performed on the second half of the CBGs in the TB to obtain a local parity block L1; and LRC coding is performed on all CBGs in the TB to obtain 2 global parity blocks P1 and P2, and the local parity block L0 and the code block group transmission information CBGTI are transmitted to the UE (denoted as RE-TRANSMISSION: L0 and CBGTI[0100]); the UE detects the parity block. If the detection is correct, an XOR operation is performed based on the correctly detected CBG0 block information in the previous transmission to obtain the CBG1 block information, and HARQ-ACK feedback information [AAAA] is fed back to the base station.

In some embodiments, the CBG that fails to be transmitted in the TB belongs to the second half of the CBGs in the TB, and the CBG indication corresponding to the packet coded data is the second half of the CBGs in the TB.

In implementation 2, taking an example where the maximum number of CBGs configured by the higher-layer parameter is 4, the TB transmitted by the current process has 8 CBs, which are divided into 4 CBGs, i.e., CBG0, CBG1, CBG2, CBG3, and each CBG contains 2 CBs. During the initial transmission, the value of the CBGTI field in DCI 1-1 is [1111], the NDI indicates new transmission data, and the current HARQ process number. The UE side receives signals of the control channel and the shared channel, and performs detection and decoding on the transport block. When only CB5 has a decoding error or a CB5 has a CRC detection error, the HARQ-ACK feedback of this CBG2 is NACK. Based on this process, the HARQ-ACK feedback information of all CBGs is fed back as [AANA] to the base station as an example.

Example 5, as shown in FIG. 9, the base station performs an XOR operation on the second half CBG blocks CBG2 and CBG3 (if the numbers of bits are not equal, align by padding zeros) to obtain a parity block P (P=CBG2⊕CBG3), and transmits the parity block P and the code block group transmission information CBGTI to the UE (denoted as RE-TRANSMISSION: P and CBGTI[0100]). The NDI in the DCI is toggled compared with that of the last time for the same process, indicating a retransmission. The UE detects the parity block. If the detection is correct, the CBG2 block information is obtained based on the correctly detected CBG3 block information in the previous transmission, and HARQ-ACK feedback information [AAAA] is fed back to the base station.

Example 6, as shown in FIG. 10, the base station divides all CBG blocks into 2 local groups, respectively including the first half of the CBGs in the TB and the second half of the CBGs in the TB, with 2 CBGs in each local group; LRC coding is performed on the first half of the CBGs in the TB to obtain a local parity block L0, and LRC coding is performed on the second half of the CBGs in the TB to obtain a local parity block L1; and LRC coding is performed on all CBGs in the TB to obtain 2 global parity blocks P1 and P2; the local parity block L1 and the code block group transmission information CBGTI are transmitted to the UE (denoted as RE-TRANSMISSION: L1 and CBGTI[0100]). The UE detects the parity block. If the detection is correct, the CBG2 block information is obtained with the correctly detected CBG3 block information in the previous transmission, and HARQ-ACK feedback information [AAAA] is fed back to the base station.

In some embodiments, the CBG that fails to be transmitted in the TB includes the first half of the CBGs in the TB and belongs to the second half of the CBGs in the TB, and the CBG indication corresponding to the packet coded data is the first half of the CBGs in the TB and the second half of the CBGs in the TB.

In implementation 3, taking an example where the maximum number of CBGs configured by the higher-layer parameter is 8, the TB block transmitted by the current process has 8 CBs, which are divided into 8 CBGs, i.e., CBG0, CBG1, CBG2, CBG3, CBG4, CBG5, CBG6, CBG7, and each CBG contains 1 CB. During the initial transmission, the value of the CBGTI field in DCI 1-1 is [11111111], the NDI indicates new transmission data, and the current HARQ process number. The UE side receives signals of the control channel and the shared channel, and performs detection and decoding on the transport block. When CB2 and CB6 have decoding errors or CB2 CRC and CB6 CRC have detection errors, the HARQ-ACK feedback of CBG2 and CBG6 are NACK. Based on this process, the HARQ-ACK feedback information of all CBGs is fed back as [AANAAANA] to the base station as an example.

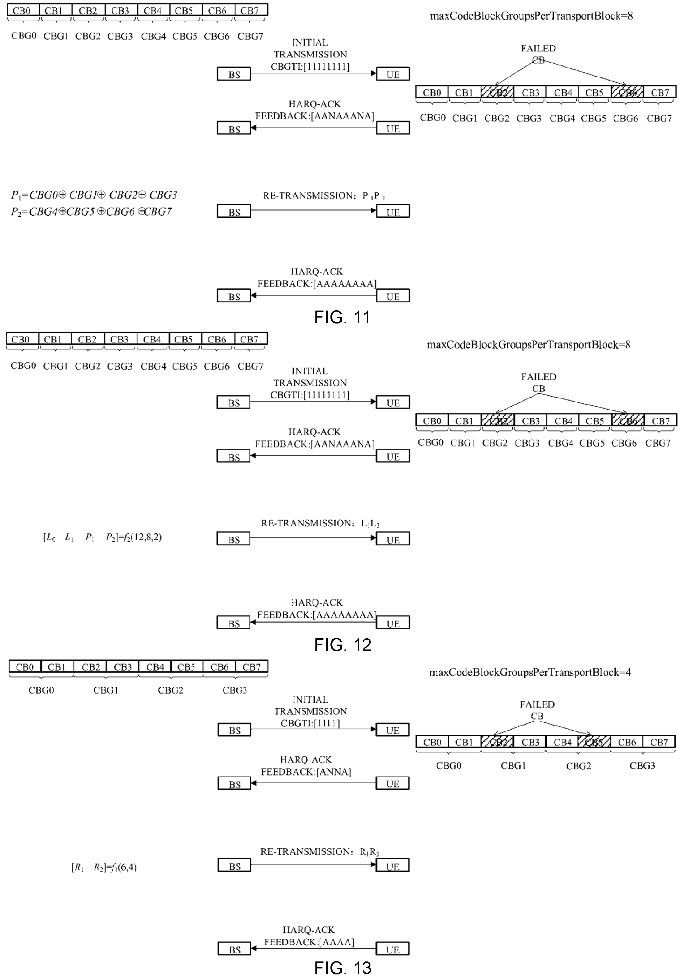

Example 7, as shown in FIG. 11, the base station performs XOR coding on the first half CBG blocks, CBG0, CBG1, CBG2, CBG3 (if the numbers of bits are not equal, align by padding zeros), to obtain a parity block P1 (P1=CBG0⊕CBG1⊕CBG2⊕CBG3), and performs XOR coding on the second half CBG blocks, CBG4, CBG5, CBG6, CBG7, to obtain a parity block P2 (P2=CBG4⊕CBG5⊕CBG6⊕CBG7), and transmits the parity blocks P1 and P2 to the UE. The UE detects the parity blocks. If the detection is correct, P1 is decoded together with the correctly detected CBG0, CBG1, CBG3 block information in the previous transmission to obtain the CBG2 block information, and P2 is decoded together with the correctly detected CBG4, CBG5, CBG7 block information in the previous transmission to obtain the CBG6 block information, and HARQ-ACK feedback information [AAAAAAAA] is fed back to the base station.

Example 8, as shown in FIG. 12, the base station divides all CBG blocks into 2 local groups, respectively including the first half of the CBGs in the TB and the second half of the CBGs in the TB, with 2 CBGs in each local group; LRC coding is performed on the first half of the CBGs in the TB to obtain a local parity block L0, and LRC coding is performed on the second half of the CBGs in the TB to obtain a local parity block L1; and LRC coding is performed on all CBGs in the TB to obtain 2 global parity blocks P1 and P2; and the two local parity blocks L1, L2 are transmitted to the UE; the UE detects the parity blocks; if the detection is correct, L1, and CBG0, CBG1, CBG are subjected to an XOR operation together to obtain CBG2, and L2 and CBG0, CBG1, CBG are subjected to an XOR operation together to obtain CBG6, and HARQ-ACK feedback information [AAAAAAAA] is fed back to the base station.

In some embodiments, the number of CBGs that fail to be transmitted in the TB is greater than a first threshold, and a ratio between the number of CBGs that fail to be transmitted and the number of CBGs in the TB is less than or equal to a second threshold, the CBG indication corresponding to the packet coded data is all CBGs in the TB.

In implementation 4, as shown in FIG. 13, the maximum number of CBGs configured by the higher-layer parameter is 4, the TB block transmitted by the current process has 8 CBs, which are divided into 4 CBGs, i.e., CBG0, CBG1, CBG2, CBG3, and each CBG contains 2 CBs; during the initial transmission, the value of the CBGTI field in DCI 1-1 is [1111], the NDI indicates new transmission data, and the current HARQ process number. The UE side receives signals of the control channel and the shared channel, and performs detection and decoding on the transport block; when CB2 and CB5 have decoding errors or CB2 CRC and CB5 CRC have detection errors, the HARQ-ACK feedback of CBG1 and CBG2 are NACK. Based on this process, the HARQ-ACK feedback information of all CBGs is fed back as [ANNA] to the base station; after the base station successfully receives the HARQ-ACK feedback information of this process, an RS operation is performed on all CBG blocks (if the numbers of bits are not equal, align by padding zeros) to obtain parity blocks R1 and R2, and transmits the parity blocks R1 and R2 to the UE; the UE detects the parity blocks. If the detection is correct, the CBG1 and CBG2 block information is obtained based on the correctly detected CBG0 and CBG3 block information in the previous transmission, and HARQ-ACK information [AAAA] is fed back to the base station.

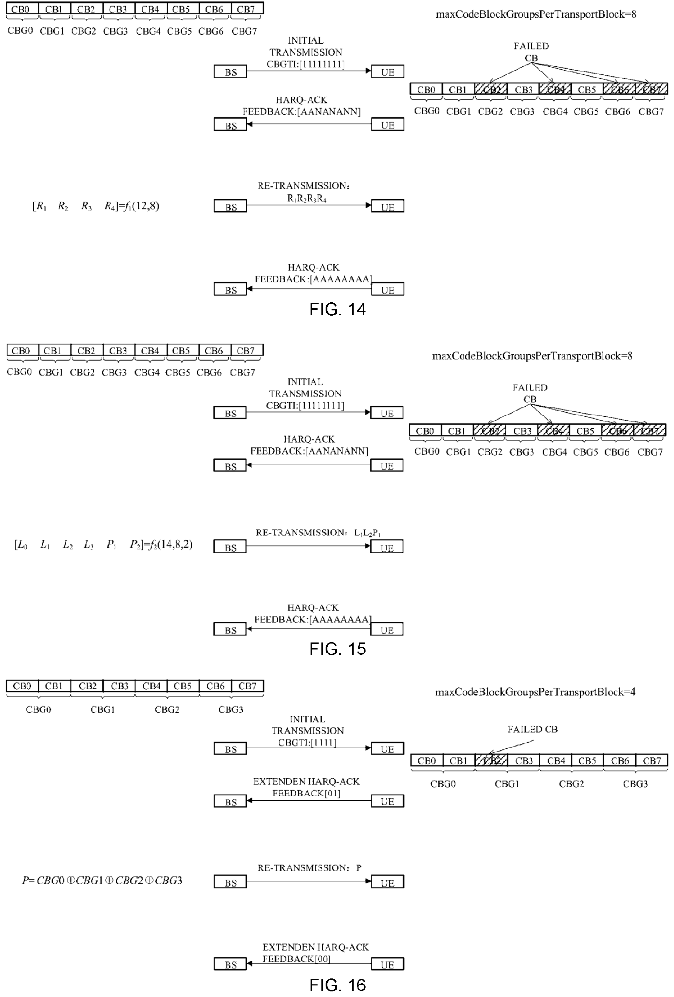

In implementation 5, as shown in FIG. 14, the maximum number of CBGs configured by the higher-layer parameter is 8, the TB block transmitted by the current process has 8 CBs, which are divided into 8 CBGs, i.e., CBG0, CBG1, CBG2, CBG3, CBG4, CBG5, CBG6, CBG7, and each CBG contains 1 CB. During the initial transmission, the value of the CBGTI field in DCI 1-1 is [11111111], the NDI indicates new transmission data, and the current HARQ process number; the UE side receives signals of the control channel and the shared channel, and performs detection and decoding on the transport block. When CB2, CB4, CB6, and CB7 have decoding errors or CB2 CRC, CB4 CRC, CB6 CRC, and CB7 CRC have detection errors, the HARQ-ACK feedback of CBG2, CBG4, CBG6, and CBG7 are NACK; based on this process, the HARQ-ACK feedback information of all CBGs is fed back as [AANANANN] to the base station. After the base station successfully receives the HARQ-ACK feedback information of this process, RS coding is performed on all CBG blocks (if the numbers of bits are not equal, align by padding zeros) to obtain parity blocks R1, R2, R3, and R4, and transmits the parity blocks R1, R2, R3, and R4 to the UE; the UE detects the parity blocks. If the detection is correct, decoding is performed together according to the correctly detected CBG0, CBG1, CBG3, and CBG5 block information in the previous transmission to obtain the CBG2, CBG4, CBG6, and CBG7 block information, and HARQ-ACK feedback information [AAAAAAAA] is fed back to the base station.

In implementation 6, as shown in FIG. 15, the maximum number of CBGs configured by the higher-layer parameter is 8, the TB block transmitted by the current process has 8 CBs, which are divided into 8 CBGs, i.e., CBG0, CBG1, CBG2, CBG3, CBG4, CBG5, CBG6, CBG7, and each CBG contains 1 CB. During the initial transmission, the value of the CBGTI field in DCI 1-1 is [11111111], the NDI indicates new transmission data, and the current HARQ process number; the UE side receives signals of the control channel and the shared channel, and performs detection and decoding on the transport block. CB2, CB4, CB6, and CB7 have decoding errors or CB2 CRC, CB4 CRC, CB6 CRC, and CB7 CRC have detection errors, and the HARQ-ACK feedback of CBG2, CBG4, CBG6, and CBG7 are NACK; based on this process, the HARQ-ACK feedback information of all CBGs is fed back as [AANANANN] to the base station. After the base station successfully receives the HARQ-ACK feedback information of this process, all CBG blocks are divided into 4 local groups, with 2 CBGs in each local group, LRC coding is performed to obtain 4 local parity blocks L0, L1, L2, L3 and 2 global parity blocks P1, P2, and the local parity blocks L1 and L2 and the global parity block P1 are transmitted to the UE; the UE detects these parity blocks. If the detection is correct, based on the correctly detected CBG0, CBG1, CBG3, and CBG5 block information in the previous transmission, the CBG2, CBG4, CBG6, and CBG7 block information is obtained, and HARQ-ACK feedback information [AAAAAAAA] is fed back to the base station.

In some embodiments, the HARQ-ACK feedback information is used to indicate a CBG error condition in the TB.

In some embodiments, a value of the HARQ-ACK feedback information is a first value, and the first value is used to indicate that the TB is transmitted successfully;
the HARQ-ACK feedback information further includes one or more other values, and each of the one or more other values is used to indicate at least one of:
used to indicate that one CBG fails to be transmitted;
used to indicate that two CBGs fail to be transmitted;
used to indicate that the number of CBGs that fail to be transmitted is less than or equal to a first threshold;
used to indicate that a number of transmission failures is greater than the first threshold;
used to indicate that a ratio between the number of CBGs that fail to be transmitted and a number of CBGs in the TB is less than or equal to a second threshold;
used to indicate that a ratio between the number of CBGs that fail to be transmitted and the number of CBGs in the TB is greater than the second threshold; used to indicate a data retransmission type, the data retransmission type including retransmission based on packet coding;
used to indicate that there is a CBG error in the first half of the CBGs in the TB;
used to indicate that there is a CBG error in the second half of the CBGs in the TB;
used to indicate that, according to the CBG indices, CBGs at an interval in the TB have errors;
used to indicate that no physical shared channel is received; or
used to indicate a TB error.

Exemplarily, the value of the HARQ-ACK feedback information being 00 is used to indicate that the TB is transmitted successfully; the values of the HARQ-ACK feedback information being 01 and 10 are used to indicate that the packet coding operation corresponding to the data retransmission type is an XOR operation; or, the values of the HARQ-ACK feedback information being 01 and 10 are used to indicate that the packet coding operation corresponding to the data retransmission type is RS coding; or, the values of the HARQ-ACK feedback information being 01 and 10 are used to indicate that the packet coding operation corresponding to the data retransmission type is LRC coding; or, the value of the HARQ-ACK feedback information being 01 is used to indicate that the packet coding operation corresponding to the data retransmission type is an XOR operation, and the value of the HARQ-ACK feedback information being 10 is used to indicate that the packet coding operation corresponding to the data retransmission type is RS coding; or, the value of the HARQ-ACK feedback information being 01 is used to indicate that the packet coding operation corresponding to the data retransmission type is an XOR operation, and the value of the HARQ-ACK feedback information being 10 is used to indicate that the packet coding operation corresponding to the data retransmission type is LRC coding; or, the value of the HARQ-ACK feedback information being 01 is used to indicate that the packet coding operation corresponding to the data retransmission type is LRC coding, and the value of the HARQ-ACK feedback information being 10 is used to indicate that the packet coding operation corresponding to the data retransmission type is RS coding; or, the value of the HARQ-ACK feedback information being 01 is used to indicate that the packet coding operation corresponding to the data retransmission type is RS coding, and the value of the HARQ-ACK feedback information being 10 is used to indicate that the packet coding operation corresponding to the data retransmission type is LRC coding.

Exemplarily, the value of the HARQ-ACK feedback information being 00 indicates ACK is fed back, and a new packet is retransmitted; the value of the HARQ-ACK feedback information being 01 indicates a packet coding operation; the value of the HARQ-ACK feedback information being 10 indicates that no PDSCH is received; the value of the HARQ-ACK feedback information being 11 indicates NACK, and the entire TB block is retransmitted.

In some embodiments, a value of the HARQ-ACK feedback information is a first value, and the first value is used to indicate that the TB is transmitted successfully; a value of the HARQ-ACK feedback information is a second value, and the second value is used to indicate that one CBG fails to be transmitted; a value of the HARQ-ACK feedback information is a third value, and the third value is used to indicate that two CBGs fail to be transmitted.

In some embodiments, a value of the HARQ-ACK feedback information is a first value, and the first value is used to indicate that the TB is transmitted successfully; a value of the HARQ-ACK feedback information is a second value, and the second value is used to indicate that the number of CBGs that fail to be transmitted is less than or equal to a first threshold; a value of the HARQ-ACK feedback information is a third value, and the third value is used to indicate that the number of transmission failures is greater than the first threshold and the ratio between the number of CBGs that fail to be transmitted and the number of CBGs in the TB is less than or equal to a second threshold; a value of the HARQ-ACK feedback information is a fourth value, and the fourth value is used to indicate that the ratio between the number of CBGs that fail to be transmitted and the number of CBGs in the TB is greater than the second threshold.

Exemplarily, based on the extended HARQ-ACK feedback information, the ACK/NACK information of each CBG will be combined and processed, and the extended HARQ-ACK information is fed back to the transmitting end. The 1-bit HARQ-ACK feedback information is extended to 2 bits. The extended HARQ-ACK feedback information is used in the case where the higher-layer parameter maxCodeBlockGroupsPerTransportBlock is greater than or equal to 4, and the extended HARQ-ACK feedback information has the following concentrated representation:
00 indicates that the transport block is transmitted correctly, and the transmitting end does not need to resend information;
when maxCodeBlockGroupsPerTransportBlock is configured as 4, 01 is used to indicate the case where 1 CBG fails to be transmitted, and 10 is used to indicate the case where 2 CBGs fail to be transmitted. When maxCodeBlockGroupsPerTransportBlock is configured as greater than 4, 01 is used to indicate when the number of CBGs that fail to be transmitted is less than or equal to the first threshold; 10 is used to indicate when the number of CBGs that fail to be transmitted is greater than the first threshold, and the ratio is less than or equal to the second threshold; 11 is used to indicate when the ratio of CBGs that fail to be transmitted is greater than the second threshold.

In some embodiments, a value of the HARQ-ACK feedback information is a first value, and the first value is used to indicate that the TB is transmitted successfully; a value of the HARQ-ACK feedback information is a second value, and the second value is used to indicate that the TB transmission fails and packet coding retransmission is expected, or, the second value is used to indicate that the number of CBGs that fail to be transmitted is less than or equal to a first threshold, or, the second value is used to indicate that the number of CBGs that fail to be transmitted is 1;
a value of the HARQ-ACK feedback information is a third value, and the third value is used to indicate that no physical shared channel is received;
a value of the HARQ-ACK feedback information is a fourth value, and the fourth value is used to indicate that the TB transmission fails.

Exemplarily, the value of the HARQ-ACK feedback information being 00 indicates that the TB is transmitted successfully; the value of the HARQ-ACK feedback information being 01 indicates that the TB transmission fails and packet coding retransmission is expected, or, the value being 01 is used to indicate that the number of CBGs that fail to be transmitted is less than or equal to a first threshold, or, the value being 01 is used to indicate that the number of CBGs that fail to be transmitted is 1; the value of the HARQ-ACK feedback information being 10 indicates that no PDSCH is received; the value of the HARQ-ACK feedback information being 11 indicates that the TB transmission fails, and the entire TB block is retransmitted.

In implementation 7, as shown in FIG. 16, the maximum number of CBGs configured by the higher-layer parameter is 4, the TB block transmitted by the current process has 8 CBs, which are divided into 4 CBGs, i.e., CBG0, CBG1, CBG2, CBG3, and each CBG contains 2 CBs; during the initial transmission, the value of the CBGTI field in DCI 1-1 is [1111], the NDI indicates new transmission data, and the current HARQ process number. The UE side receives signals of the control channel and the shared channel, and performs detection and decoding on the transport block; when only CB2 has a decoding error or a CB2 CRC has detection error, the HARQ-ACK feedback of this CBG1 is NACK. Based on this process, the HARQ-ACK feedback information of all CBGs is fed back as [01] to the base station; after the base station successfully receives the HARQ-ACK feedback information of this process, an XOR operation is performed on all CBG blocks (if the numbers of bits are not equal, align by padding zeros) to obtain a parity block P, and the parity block P is transmitted to the UE; the UE detects the parity block. If the detection is correct, based on the correctly detected CBG0, CBG2, and CBG3 block information in the previous transmission, the CBG1 block information is obtained, and HARQ-ACK feedback information [00] is fed back to the base station.

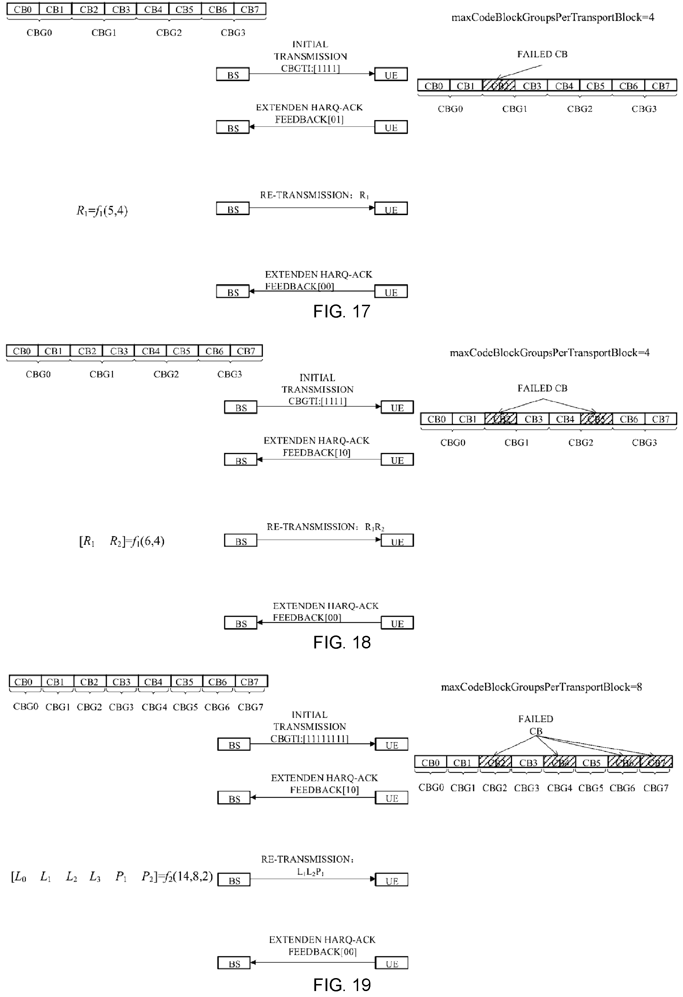

In implementation 8, as shown in FIG. 17, the maximum number of CBGs configured by the higher-layer parameter is 4, the TB block transmitted by the current process has 8 CBs, which are divided into 4 CBGs, i.e., CBG0, CBG1, CBG2, CBG3, and each CBG contains 2 CBs; during the initial transmission, the value of the CBGTI field in DCI 1-1 is [1111], the NDI indicates new transmission data, and the current HARQ process number; the UE side receives signals of the control channel and the shared channel, and performs detection and decoding on the transport block. When only CB2 has a decoding error or a CB2 CRC has detection error, the HARQ-ACK feedback of this CBG1 is NACK. Based on this process, the extended HARQ-ACK feedback information is fed back as [01] to the base station; after the base station successfully receives the extended HARQ-ACK feedback information of this process, RS coding is performed on all CBG blocks (if the numbers of bits are not equal, align by padding zeros) to obtain a parity block R1, and the parity block R1 is transmitted to the UE; the UE detects the parity block. If the detection is correct, decoding is performed together according to the correctly detected CBG0, CBG2, and CBG3 block information in the previous transmission to obtain the CBG1 block information, and the extended HARQ-ACK feedback information [00] is fed back to the base station.

In implementation 9, as shown in FIG. 18. The maximum number of CBGs configured by the higher-layer parameter is 4, the TB block transmitted by the current process has 8 CBs, which are divided into 4 CBGs, i.e., CBG0, CBG1, CBG2, CBG3, and each CBG contains 2 CBs; during the initial transmission, the value of the CBGTI field in DCI 1-1 is [1111], the NDI indicates new transmission data, and the current HARQ process number; the UE side receives signals of the control channel and the shared channel, and performs detection and decoding on the transport block. CB2 and CB5 have decoding errors or CB2 CRC and CB5 CRC have detection errors, and the HARQ-ACK feedback information of both CBG1 and CBG2 is NACK. Based on this process, the extended HARQ-ACK feedback information is fed back as [10] to the base station; after the base station successfully receives the extended HARQ-ACK feedback information of this process, an RS coding operation is performed on all CBG blocks (if the numbers of bits are not equal, align by padding zeros) to obtain parity blocks R1 and R2, and the 2 parity blocks R1 and R2 are transmitted to the UE. The UE detects the two parity blocks; if the detection is correct, RS decoding is performed together according to the correctly detected CBG0 and CBG3 block information in the previous transmission to obtain the CBG1 and CBG2 block information, and HARQ-ACK feedback information [00] is fed back to the base station.

In implementation 10, as shown in FIG. 19, the maximum number of CBGs configured by the higher-layer parameter is 8, the TB block transmitted by the current process has 8 CBs, which are divided into 8 CBGs, i.e., CBG0, CBG1, CBG2, CBG3, CBG4, CBG5, CBG6, CBG7, and each CBG contains 1 CB; during the initial transmission, the value of the CBGTI field in DCI 1-1 is [11111111], the NDI indicates new transmission data, and the current HARQ process number; the UE side receives signals of the control channel and the shared channel, and performs detection and decoding on the transport block. CB2, CB4, CB6, and CB7 have decoding errors or CB2 CRC, CB4 CRC, CB6 CRC, and CB7 CRC have detection errors, and the HARQ-ACK feedback of CBG2, CBG4, CBG6, and CBG7 are NACK; based on this process, the extended HARQ-ACK feedback information is fed back as [10] to the base station; after the base station successfully receives the HARQ-ACK feedback information of this process, all CBG blocks are divided into 4 local groups, with 2 CBGs in each local group, LRC coding is performed to obtain 4 local parity blocks L0, L1, L2, L3, and 2 global parity blocks P1 and P2, and the local parity blocks L1, L2 and the global parity block P1 are transmitted to the UE; the UE detects these parity blocks. If the detection is correct, based on the correctly detected CBG0, CBG1, CBG3, and CBG5 block information in the previous transmission, the CBG2, CBG4, CBG6, and CBG7 block information is obtained, and HARQ-ACK feedback information [00] is fed back to the base station.

It can be understood that, as the number of HARQ processes increases, the overhead saved is more obvious.

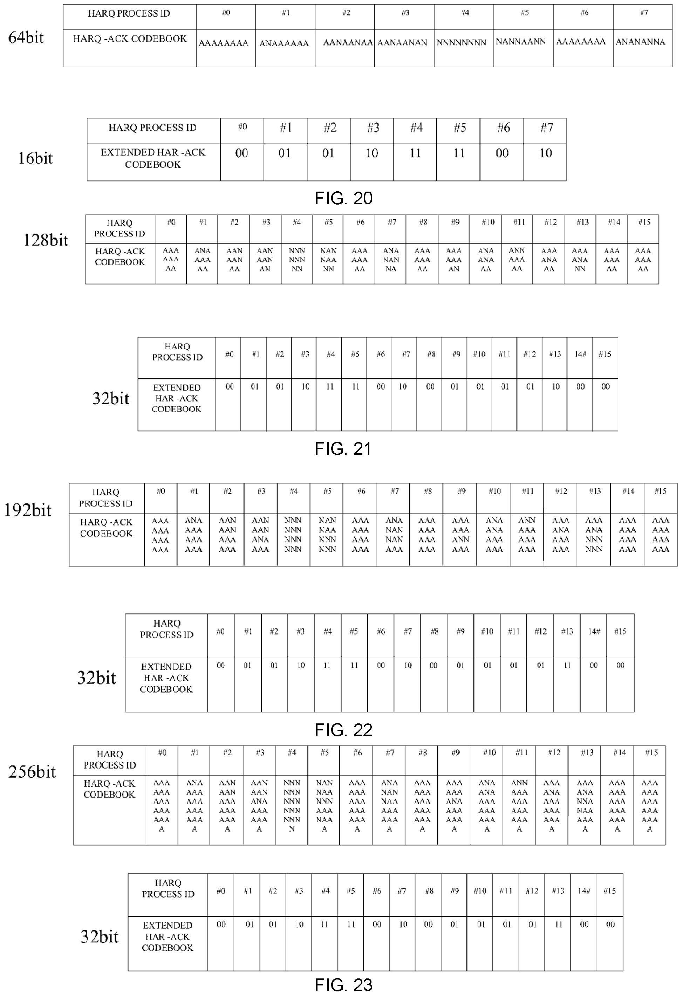

For example, as shown in FIG. 20, when the number of HARQ processes is 8 and the number of CBGs is 8, the number of codewords of the HARQ-ACK feedback information (denoted as HARQ-ACK CODEBOOK) is reduced from the original 64 bits to 16 bits.

For another example, as shown in FIG. 21, when the number of HARQ processes is 16 and the number of CBGs is 8, the number of codewords of the HARQ-ACK feedback information is reduced from the original 128 bits to 32 bits.

For another example, as shown in FIG. 22, when the number of HARQ processes is 16 and the number of CBGs is 12, the number of codewords of the HARQ-ACK feedback information is reduced from the original 192 bits to 32 bits.

For another example, as shown in FIG. 23, when HARQ is 16 and the number of CBGs is 16, the number of codewords of the HARQ-ACK feedback information is reduced from the original 256 bits to 32 bits.

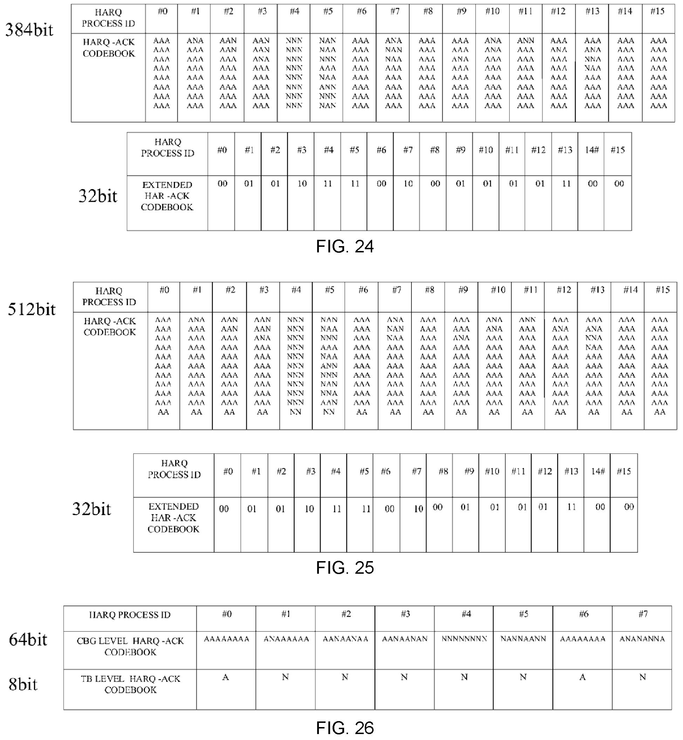

For another example, as shown in FIG. 24, when HARQ is 16 and the number of CBGs is 24, the number of codewords of the HARQ-ACK feedback information is reduced from the original 384 bits to 32 bits.

For another example, as shown in FIG. 25, when HARQ is 16 and the number of CBGs is 32, the number of codewords of the HARQ-ACK feedback information is reduced from the original 512 bits to 32 bits.

In some embodiments, the second node sends second indication information to the first node; correspondingly, the first node receives the second indication information sent from the second node. The second indication information is used to combine with the HARQ-ACK feedback information to determine to-be-transmitted data.

In some embodiments, a value of the second indication information is a fifth value, and the fifth value is used to indicate that, in the case where the HARQ-ACK feedback information indicates that the TB transmission fails, it is expected that the TB retransmission includes retransmission based on packet coding; a value of the second indication information is a sixth value, and the sixth value is used to indicate that, in the case where the HARQ-ACK feedback information indicates that the TB transmission fails, the TB is retransmitted.

In some embodiments, a value of the second indication information is a seventh value, and the seventh value is used to indicate that all CBGs in the TB are transmitted successfully; a value of the second indication information is an eighth value, and the eighth value is used to indicate that the number of CBGs that fail to be transmitted is less than or equal to a first threshold; a value of the second indication information is a ninth value, and the ninth value is used to indicate that the number of transmission failures is greater than the first threshold and the ratio between the number of CBGs that fail to be transmitted and the number of CBGs in the TB is less than or equal to a second threshold; a value of the second indication information is a tenth value, and the tenth value is used to indicate that the ratio between the number of CBGs that fail to be transmitted and the number of CBGs in the TB is greater than the second threshold.

Exemplarily, as shown in FIG. 26, in the case where the higher-layer parameter maxCodeBlockGroupsPerTransportBlock is greater than or equal to 4, the CBG-level HARQ-ACK feedback is changed to TB-level HARQ-ACK feedback. The HARQ-ACK feedback information being A is used to indicate that the TB is transmitted successfully, and [N] is used to indicate that the TB transmission fails. If there exists any CBG that fails to be transmitted or any CBG that fails to be transmitted among the CBGs corresponding to the TB, the TB transmission fails.

Together with the TB-level HARQ-ACK feedback, a piece of second indication information is sent to the transmitting end.

The second indication information is determined in one of the following manners:
configured by higher-layer signaling.

The size of the second indication information may be predefined as 1 bit, 2 bits, 3 bits, 4 bits, 5 bits, or 6 bits.

For example, when the second indication information is 1 bit, 0 indicates that in the case of TB transmission failure, it is expected that the TB retransmission includes retransmission based on packet coding; 1 is used for, in the case where the HARQ-ACK feedback information indicates that the TB transmission fails, retransmitting the TB.

For another example, when the second indication information is 2 bits, 00 is used to indicate that all CBGs in the TB are transmitted successfully; 11 is used to indicate that the number of CBGs that fail to be transmitted is less than or equal to a first threshold; 01 is used to indicate that the number of transmission failures is greater than the first threshold and the ratio between the number of CBGs that fail to be transmitted and the number of CBGs in the TB is less than or equal to a second threshold; 10 is used to indicate that the ratio between the number of CBGs that fail to be transmitted and the number of CBGs in the TB is greater than the second threshold.

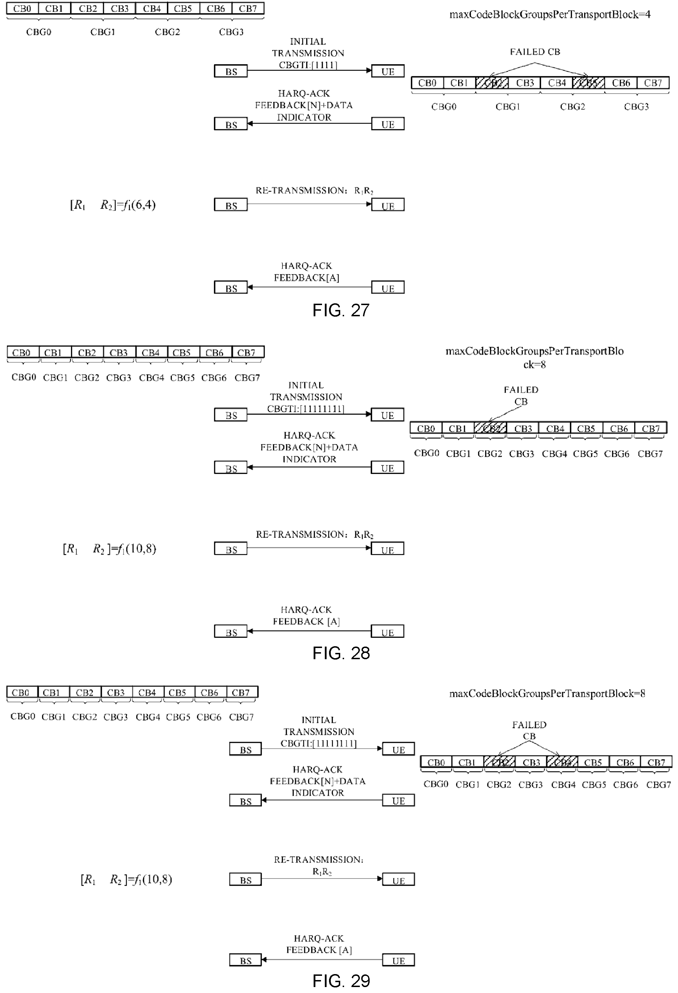

In implementation 11, as shown in FIG. 27, the maximum number of CBGs configured by the higher-layer parameter is 4, the TB block transmitted by the current process has 8 CBs, which are divided into 4 CBGs, i.e., CBG0, CBG1, CBG2, CBG3, and each CBG contains 2 CBs; during the initial transmission, the value of the CBGTI field in DCI 1-1 is [1111], the NDI indicates new transmission data, and the current HARQ process number. The UE side receives signals of the control channel and the shared channel, and performs detection and decoding on the transport block; CB2 and CB5 have decoding errors or CB2 CRC and CB5 CRC have detection errors, and the HARQ-ACK feedback of both CBG1 and CBG2 is NACK. Based on this process, the TB-level HARQ-ACK information [N] and a data indicator (denoted as DATA INDICATOR) are fed back to the base station; after the base station successfully receives the TB-level HARQ-ACK feedback information and the data indicator of this process, an RS coding operation is performed on all CBG blocks (if the numbers of bits are not equal, align by padding zeros) to obtain parity blocks R1 and R2, and R1 and R2 are transmitted to the UE; the UE detects the two parity blocks. If the detection is correct, RS decoding is performed together according to the correctly detected CBG0 and CBG3 block information in the previous transmission to obtain the CBG1 and CBG2 block information, and HARQ-ACK feedback information [A] is fed back to the base station.

In implementation 12, as shown in FIG. 28, the maximum number of CBGs configured by the higher-layer parameter is 8, the TB block transmitted by the current process has 8 CBs, which are divided into 4 CBGs, i.e., CBG0, CBG1, CBG2, CBG3, CBG4, CBG5, CBG6, CBG7, and each CBG contains 1 CB; during the initial transmission, the value of the CBGTI field in DCI 1-1 is [11111111], the NDI indicates new transmission data, and the current HARQ process number. The UE side receives signals of the control channel and the shared channel, and performs detection and decoding on the transport block; CB2 has a decoding error or a CB2 CRC has detection error, and the HARQ-ACK feedback of CBG1 is NACK. Based on this process, the TB-level HARQ-ACK feedback information [N] and a data indicator are fed back to the base station; after the base station successfully receives the TB-level HARQ-ACK feedback information and the data indicator of this process, an RS coding operation is performed on all CBG blocks (if the numbers of bits are not equal, align by padding zeros) to obtain parity blocks R1 and R2, and R1 and R2 are transmitted to the UE; the UE detects the two parity blocks. If the detection is correct, RS decoding is performed together according to the correctly detected CBG0, CBG2, CBG3, CBG4, CBG5, CBG6, and CBG7 block information in the previous transmission to obtain the CBG1 block information, and HARQ-ACK feedback information [A] is fed back to the base station.

In implementation 13, as shown in FIG. 29. The maximum number of CBGs configured by the higher-layer parameter is 8, the TB block transmitted by the current process has 8 CBs, which are divided into 4 CBGs, i.e., CBG0, CBG1, CBG2, CBG3, CBG4, CBG5, CBG6, CBG7, and each CBG contains 1 CB; during the initial transmission, the value of the CBGTI field in DCI 1-1 is [11111111], the NDI indicates new transmission data, and the current HARQ process number. The UE side receives signals of the control channel and the shared channel, and performs detection and decoding on the transport block; CB2 and CB4 have decoding errors or CB2 CRC and CB4 CRC have detection errors, and the HARQ-ACK feedback of CBG2 and CBG4 is NACK. Based on this process, the TB-level HARQ-ACK feedback information [N] and a data indicator are fed back to the base station; after the base station successfully receives the TB-level HARQ-ACK feedback information and the data indicator of this process, an RS coding operation is performed on all CBG blocks (if the numbers of bits are not equal, align by padding zeros) to obtain parity blocks R1 and R2, and the 2 parity blocks R1 and R2 are transmitted to the UE; the UE detects the two parity blocks. If the detection is correct, RS decoding is performed together according to the correctly detected CBG0, CBG1, CBG3, CBG5, CBG6, and CBG7 block information in the previous transmission to obtain the CBG2 and CBG4 block information, and HARQ-ACK information [A] is fed back to the base station.

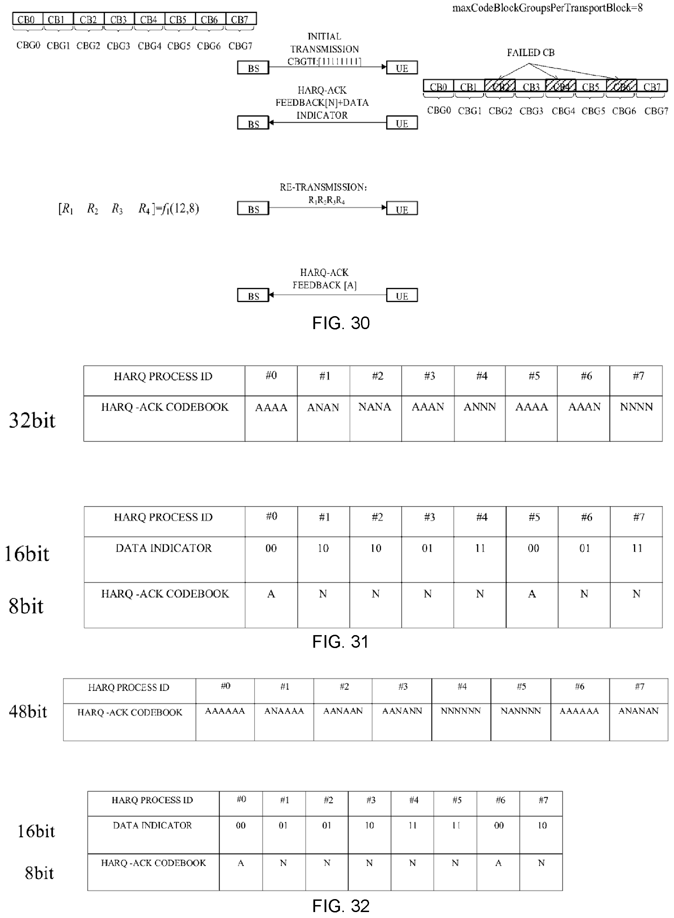

In implementation 14, as shown in FIG. 30. The maximum number of CBGs configured by the higher-layer parameter is 8, the TB block transmitted by the current process has 8 CBs, which are divided into 4 CBGs, i.e., CBG0, CBG1, CBG2, CBG3, CBG4, CBG5, CBG6, CBG7, and each CBG contains 1 CB. During the initial transmission, the value of the CBGTI field in DCI 1-1 is [11111111], the NDI indicates new transmission data, and the current HARQ process number; the UE side receives signals of the control channel and the shared channel, and performs detection and decoding on the transport block. CB2, CB4, and CB6 have decoding errors or CB2 CRC, CB4 CRC, and CB6 CRC have detection errors, and the HARQ-ACK feedback of CBG2, CBG4, and CBG6 is NACK. Based on this process, the TB-level HARQ-ACK feedback information [N] and a data indicator are fed back to the base station; after the base station successfully receives the TB-level HARQ-ACK feedback information and the data indicator of this process, an RS coding operation is performed on all CBG blocks (if the numbers of bits are not equal, align by padding zeros) to obtain parity blocks R1, R2, R3, and R4, and the 4 parity packets are transmitted to the UE; the UE detects the four parity blocks. If the detection is correct, RS decoding is performed together with the correctly detected CBG0, CBG1, CBG3, CBG5, and CBG7 block information in the previous transmission to obtain the CBG2, CBG4, and CBG6 block information, and HARQ-ACK feedback information [A] is fed back to the base station.

It can be understood that, as the number of HARQ processes increases and the number of CBGs increases, the overhead saved is more obvious.

For example, as shown in FIG. 31, when HARQ is 8 and the number of CBGs is 4, the feedback overhead is reduced from the original 32 bits to 24 bits.

For another example, as shown in FIG. 32, when HARQ is 8 and the number of CBGs is 6, the feedback overhead is reduced from the original 48 bits to 24 bits.

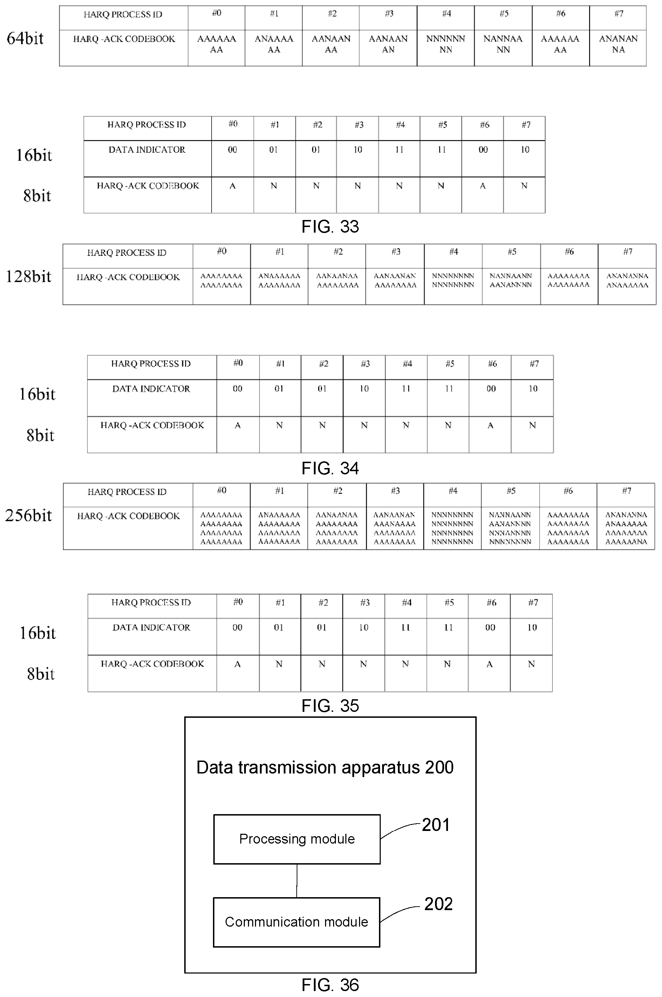

For another example, as shown in FIG. 33, when HARQ is 8 and the number of CBGs is 8, the feedback overhead is reduced from the original 64 bits to 24 bits.

For another example, as shown in FIG. 34, when HARQ is 8 and the number of CBGs is 16, the feedback overhead is reduced from the original 128 bits to 24 bits.

For another example, as shown in FIG. 35, when HARQ is 8 and the number of CBGs is 32, the feedback overhead is reduced from the original 256 bits to 24 bits.

Based on this, when the TB is large and the number of CBGs is large, the second node can know the data transmission type in advance, thereby making a judgment and preparing for retransmission more quickly, reducing the feedback overhead and improving the data retransmission reliability.

The above mainly introduces the solutions of the embodiments of the present disclosure from the perspective of methods. Hereinafter, a data transmission apparatus is also shown. The data transmission apparatus is configured to perform the data transmission method in any of the above embodiments and possible implementations thereof, and a data transmission apparatus is configured to perform the data transmission method in any of the above embodiments and their possible implementations thereof.

It can be understood that, for the data transmission apparatus to implement the data transmission method, the data transmission apparatus includes corresponding hardware structures and/or software modules for performing each function; those skilled in the art should easily be aware that, in combination with the algorithm steps of each example described in the embodiments of the present disclosure, the present disclosure can be implemented in the form of hardware or a combination of hardware and computer software. Whether a certain function is executed in a manner of hardware or computer software driving hardware depends on the specific application and design constraints of the technical solution. Professional technicians may use different methods for each specific application to implement the described functions, but such implementation should not be considered as exceeding the scope of the present disclosure.

The embodiments of the present disclosure may divide the data transmission apparatus into functional modules according to the above method embodiments. For example, each functional module may be divided corresponding to each function, or two or more functions may be integrated into one functional module. The above integrated modules may be implemented in the form of hardware or in the form of software. It should be noted that the division of modules in the embodiments of the present disclosure is schematic and is only a logical function division. There may be other division methods in actual implementation. The following description takes the example of dividing each functional module corresponding to each function.

FIG. 36 is a data transmission apparatus provided by the embodiments of the present disclosure, applied to a first node. The data transmission apparatus 200 includes: a processing module 201 and a communication module 202;
the processing module 201 is configured to generate first indication information indicating a data transmission type;
the communication module 202 is configured to transmit the first indication information indicating the data transmission type;
the communication module 202 is further configured to perform data transmission with a second node based on the first indication information.

In some embodiments, the communication module 202 is configured to, based on the first indication information, transmit data to the second node; or, the communication module 202 is configured to, based on the first indication information, receive data transmitted from the second node.

In some embodiments, the first indication information is transmitted in uplink scheduling information; or, the first indication information is transmitted in downlink scheduling information.

In some embodiments, the communication module 202 is configured to receive hybrid automatic repeat request (HARQ-ACK) feedback information sent from the second node.

In some embodiments, the HARQ-ACK feedback information is used to indicate whether each code block group (CBG) in a transport block (TB) is transmitted successfully.

In some embodiments, the communication module 202 is configured to perform a packet coding operation on at least one CBG including a CBG that fails to be transmitted, to obtain a retransmission packet; and send the retransmission packet to the second node.

In some embodiments, performing the packet coding operation on at least one CBG including the CBG that fails to be transmitted, to obtain the retransmission packet, includes at least one of:
performing the packet coding operation on all CBGs in the TB, to obtain the retransmission packet;
performing the packet coding operation on the first half of the CBGs in the TB, to obtain the retransmission packet;
performing the packet coding operation on the second half of the CBGs in the TB, to obtain the retransmission packet;
performing the packet coding operation on the first half of the CBGs in the TB to obtain a first retransmission packet, and performing the packet coding operation on the second half of the CBGs in the TB to obtain a second retransmission packet; or
selecting a part of CBGs in the TB to perform the packet coding operation according to indices and an interval, to obtain the retransmission packet, wherein the interval is a predefined value, or the interval is determined according to signaling and/or the number of CBGs included in the TB.

In some embodiments, the packet coding operation includes at least one of: an XOR operation, an RS coding operation, an LRC coding operation.

In some embodiments, the first indication information includes data retransmission type indication information and/or a CBG indication corresponding to packet coded data.

In some embodiments, the data retransmission type includes at least one of: a first retransmission type, a second retransmission type, a third retransmission type, a fourth retransmission type; the first retransmission type, the second retransmission type, and the third retransmission type correspond to packet coding retransmissions in different manners, and the fourth retransmission type is a retransmission without packet coding.

In some embodiments, the retransmission data of the first retransmission type includes a retransmission packet obtained through an XOR operation between data; the retransmission data of the second retransmission type includes a retransmission packet obtained through an RS coding operation on the data; the retransmission data of the third retransmission type includes a retransmission packet obtained through an LRC coding operation on the data; the retransmission data of the fourth retransmission type includes a retransmitted CBG or TB.

In some embodiments, the CBG indication corresponding to the packet coded data is used to indicate at least one of:
all CBGs in the TB;
the first half of the CBGs in the TB;
the second half of the CBGs in the TB;
the first half of the CBGs in the TB and the second half of the CBGs in the TB; or
selecting a part of CBGs in the TB according to indices and an interval of respective CBGs in the TB.

The interval is a predefined value, or the interval is determined according to a signaling and/or a number of CBGs included in the TB.

In some embodiments, the HARQ-ACK feedback information is used to indicate a CBG error condition in the TB.

In some embodiments, a value of the HARQ-ACK feedback information is a first value, used to indicate that the TB is transmitted successfully;
the HARQ-ACK feedback information further includes one or more other values, and each value is used to indicate at least one of:
used to indicate that one CBG fails to be transmitted;
used to indicate that two CBGs fail to be transmitted;
used to indicate that a number of CBGs that fail to be transmitted is less than or equal to a first threshold;
used to indicate that the number of CBGs that fail to be transmitted is greater than the first threshold;
used to indicate that the ratio between the number of CBGs that fail to be transmitted and a number of CBGs in the TB is less than or equal to a second threshold;
used to indicate that a ratio between the number of CBGs that fail to be transmitted and the number of CBGs in the TB is greater than the second threshold;
used to indicate a data retransmission type, the data retransmission type including retransmission based on packet coding;
used to indicate that there is a CBG error in the first half of the CBGs in the TB;
used to indicate that there is a CBG error in the second half of the CBGs in the TB;
used to indicate that, according to the CBG indices, CBGs at an interval in the TB have errors;
used to indicate that no physical shared channel is received; or
used to indicate a TB error.

In some embodiments, a value of the HARQ-ACK feedback information is a first value, used to indicate that the TB is transmitted successfully;
a value of the HARQ-ACK feedback information is a second value, used to indicate that one CBG fails to be transmitted;
a value of the HARQ-ACK feedback information is a third value, used to indicate that two CBGs fail to be transmitted.

In some embodiments, a value of the HARQ-ACK feedback information is a first value, used to indicate that the TB is transmitted successfully;
a value of the HARQ-ACK feedback information is a second value, used to indicate that a number of CBGs that fail to be transmitted is less than or equal to a first threshold;
a value of the HARQ-ACK feedback information is a third value, used to indicate that a number of transmission failures is greater than the first threshold and a ratio between the number of CBGs that fail to be transmitted and a number of CBGs in the TB is less than or equal to a second threshold;
a value of the HARQ-ACK feedback information is a fourth value, used to indicate that the ratio between the number of CBGs that fail to be transmitted and the number of CBGs in the TB is greater than the second threshold.

In some embodiments, a value of the HARQ-ACK feedback information is a first value, and the first value is used to indicate that the TB is transmitted successfully;
a value of the HARQ-ACK feedback information is a second value, and the second value is used to indicate that TB transmission fails and packet coding retransmission is expected, or, used to indicate that a number of CBGs that fail to be transmitted is less than or equal to a first threshold, or, used to indicate that the number of CBGs that fail to be transmitted is 1;
a value of the HARQ-ACK feedback information is a third value, and the third value is used to indicate that no physical shared channel is received;
a value of the HARQ-ACK feedback information is a fourth value, and the fourth value is used to indicate that the TB transmission fails.

In some embodiments, the communication module 202 is configured to receive second indication information sent from the second node.

In some embodiments, a value of the second indication information is a fifth value, and the fifth value is used to indicate that, in the case where the HARQ-ACK feedback information indicates that the TB transmission fails, it is expected that that the TB retransmission includes retransmission based on packet coding; a value of the second indication information is a sixth value, and the sixth value is used to indicate that, in the case where the HARQ-ACK feedback information indicates that the TB transmission fails, the TB is retransmitted.

In some embodiments, a value of the second indication information is a seventh value, and the seventh value is used to indicate that all CBGs in the TB are transmitted successfully;
a value of the second indication information is an eighth value, and the eighth value is used to indicate that a number of CBGs that fail to be transmitted is less than or equal to a first threshold;
a value of the second indication information is a ninth value, and the ninth value is used to indicate that a number of transmission failures is greater than the first threshold and a ratio between the number of CBGs that fail to be transmitted and a number of CBGs in the TB is less than or equal to a second threshold;
a value of the second indication information is a tenth value, and the tenth value is used to indicate that a ratio between the number of CBGs that fail to be transmitted and a number of CBGs in the TB is greater than the second threshold.

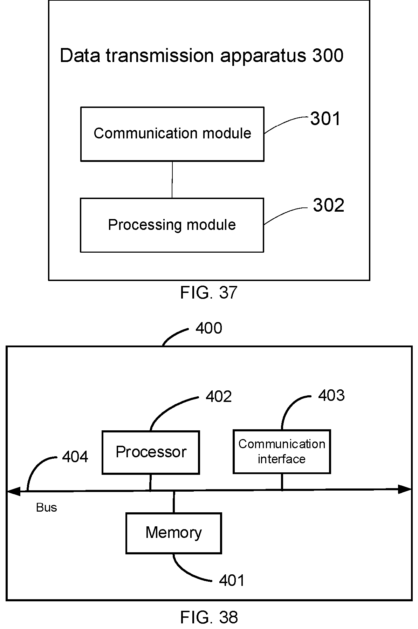

FIG. 37 is a data transmission apparatus provided by the embodiments of the present disclosure, applied to a second node. The data transmission apparatus 300 includes: a communication module 301 and a processing module 302;
the communication module 301 is configured to receive first indication information indicating a data transmission type.
the communication module 301 is further configured to perform data transmission with a first node based on the first indication information.

In some embodiments, the communication module 301 is configured to, based on the first indication information, receive data transmitted from the first node; or, the communication module 301 is configured to, based on the first indication information, transmit data to a second node.

For the content related to the first indication information, reference may be made to the description of the apparatus at the second node, and details are not repeated herein.

In some embodiments, the communication module 301 is further configured to send hybrid automatic repeat request (HARQ-ACK) feedback information.

For the content related to the hybrid automatic repeat request (HARQ-ACK) feedback information, reference may be made to the description of the apparatus at the second node, and details are not repeated herein.

In some embodiments, the communication module 301 is further configured to, in a case where the data sent from the first node is retransmission data, receive the retransmission data sent from the first node, where the retransmission data includes data obtained by the first node through packet coding on at least one CBG including a CBG that fails to be transmitted.

In some embodiments, the processing module 302 is configured to, according to the first indication information, decode the retransmission data, and obtain the CBG that fails to be transmitted based on the correctly detected CBG in the previous transmission and the retransmission data.

For the content related to the retransmission data, packet coding operation, and HARQ-ACK feedback information, reference may be made to the description of the apparatus at the second node, and details are not repeated herein.

In some embodiments, the communication module 301 is further configured to send second indication information, where the second indication information is used to combine with the HARQ-ACK feedback information to determine to-be-transmitted data.

For the content related to the second indication information, reference may be made to the description of the apparatus at the second node, and details are not repeated herein.

In the case where the functions of the above integrated modules are implemented in the form of hardware, the embodiment of the present disclosure further provides a possible structure of a communication apparatus, and the communication apparatus is configured to perform the data transmission method provided by the embodiments of the present disclosure. As shown in FIG. 38, the communication apparatus 400 includes: a communication interface 403, a processor 402, and a bus 404. In some embodiments, the communication apparatus may further include a memory 401.

The processor 402 may be for implementing or executing various exemplary logical blocks, modules, and circuits described in combination with the embodiments of the present disclosure. The processor 402 may be a central processing unit, a general-purpose processor, a digital signal processor, an application-specific integrated circuit, a field programmable gate array or other programmable logic devices, a transistor logic device, a hardware component, or any combination thereof. The processor 402 may implement or execute various exemplary logical blocks, modules, and circuits described in combination with the embodiments of the present disclosure. The processor 402 may also be a combination that implements computing functions, for example, a combination including one or more microprocessors, a combination of a DSP and a microprocessor, and the like.

The communication interface 403 is configured to connect to other devices through a communication network. The communication network may be an Ethernet, a wireless access network, a wireless local area network (WLAN), etc.

The memory 401 may be a read-only memory (ROM) or other types of static storage devices capable of storing static information and instructions, a random access memory (RAM) or other types of dynamic storage devices capable of storing information and instructions, or may be an electrically erasable programmable read-only memory (EEPROM), a magnetic disk storage medium or other magnetic storage devices, or any other medium capable of carrying or storing desired program codes in the form of instructions or data structures and capable of being accessed by a computer, but is not limited thereto.

As an implementation, the memory 401 may exist independently of the processor 402, and the memory 401 may be connected to the processor 402 through the bus 404, for storing instructions or program codes. When the processor 402 calls and executes the instructions or program codes stored in the memory 401, the data transmission method provided by the embodiments of the present disclosure can be implemented.

In another implementation manner, the memory 401 may also be integrated with the processor 402.

The bus 404 may be an extended industry standard architecture (EISA) bus or the like. The bus 404 may be divided into an address bus, a data bus, a control bus, and the like. For ease of representation, only one thick line is used in FIG. 38, but this does not mean that there is only one bus or one type of bus.

Some embodiments of the present disclosure provide a computer-readable storage medium (e.g., a non-transitory computer-readable storage medium), where the computer-readable storage medium stores computer program instructions, and the computer program instructions, upon beign run on a computer, enable the computer to perform the data transmission method according to any one of the above embodiments.

In an implementation, the computer may be the above communication apparatus, and the present disclosure does not limit the form of the computer.

In some examples, the above computer-readable storage medium may include, but is not limited to: magnetic storage devices (e.g., a hard disk, a floppy disk, or a magnetic tape, etc.), optical disks (e.g., a compact disk (CD), a digital versatile disk (DVD), etc.), smart cards, and flash memory devices (e.g., an erasable programmable read-only memory (EPROM), a card, a stick, or a key drive, etc.). The various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product including instructions, and when the computer program product runs on a computer, the computer is enabled to perform the data transmission method according to any one of the above embodiments.

The above description is only specific implementations of the present disclosure, but the protection scope of the present disclosure is not limited thereto. Any changes or replacements within the technical scope disclosed by the present disclosure shall be included within the protection scope of the present disclosure. Therefore, the protection scope of the present disclosure shall be subject to the protection scope of the claims.

## Claims

1. A data transmission method, **characterized in that** the method is applied to a first node, and comprises:
transmitting first indication information indicating a data transmission type; and
performing data transmission with a second node based on the first indication information.

2. The method according to claim 1, wherein the performing data transmission with the second node based on the first indication information comprises:
transmitting data to the second node based on the first indication information; or,
receiving data transmitted from the second node based on the first indication information.

3. The method according to claim 1, wherein the transmitting the first indication information indicating the data transmission type comprises:
the first indication information being transmitted in uplink scheduling information; or,
the first indication information being transmitted in downlink scheduling information.

4. The method according to claim 1, further comprising:
receiving, by the first node, hybrid automatic repeat request, HARQ-ACK, feedback information sent from the second node.

5. The method according to claim 4, wherein the HARQ-ACK feedback information is used to indicate whether each code block group, CBG, in a transport block, TB, is transmitted successfully.

6. The method according to claim 1 or 2, wherein the performing data transmission with the second node based on the first indication information comprises:
performing a packet coding operation on at least one CBG including a CBG that fails to be transmitted, to obtain a retransmission packet; and
sending the retransmission packet to the second node.

7. The method according to claim 6, wherein the performing the packet coding operation on the at least one CBG including the CBG that fails to be transmitted, to obtain the retransmission packet, comprises at least one of:
performing the packet coding operation on all CBGs in the TB, to obtain the retransmission packet;
performing the packet coding operation on a first half of the CBGs in the TB, to obtain the retransmission packet;
performing the packet coding operation on a second half of the CBGs in the TB, to obtain the retransmission packet;
performing the packet coding operation on the first half of the CBGs in the TB to obtain a first retransmission packet, and performing the packet coding operation on the second half of the CBGs in the TB to obtain a second retransmission packet;
selecting a part of CBGs in the TB to perform the packet coding operation according to indices and an interval of respective CBGs in the TB, to obtain the retransmission packet, wherein the interval is used to represent an absolute value of a difference between indices of two adjacent CBGs among selected part of CBGs.

8. The method according to claim 6 or 7, wherein the packet coding operation comprises at least one of: an XOR operation, an RS coding operation, an LRC coding operation.

9. The method according to any one of claims 1 to 3, wherein the first indication information comprises data retransmission type indication information and/or a CBG indication corresponding to packet coded data.

10. The method according to claim 9, wherein the data retransmission type comprises at least one of: a first retransmission type, a second retransmission type, a third retransmission type, a fourth retransmission type; wherein the first retransmission type, the second retransmission type, and the third retransmission type correspond to packet coding retransmissions in different manners, and the fourth retransmission type is a retransmission without packet coding.

11. The method according to claim 10, wherein,
retransmission data of the first retransmission type comprises a retransmission packet obtained through an XOR operation between data; retransmission data of the second retransmission type comprises a retransmission packet obtained through an RS coding operation on the data; retransmission data of the third retransmission type comprises a retransmission packet obtained through an LRC coding operation on the data; retransmission data of the fourth retransmission type comprises a retransmitted CBG or TB.

12. The method according to claim 9, wherein the CBG indication corresponding to the packet coded data is used to indicate at least one of:
all CBGs in the TB;
a first half of the CBGs in the TB;
a second half of the CBGs in the TB;
the first half of the CBGs in the TB and the second half of the CBGs in the TB;
selecting a part of CBGs in the TB according to indices and an interval of respective CBGs in the TB.

13. The method according to claim 4, wherein the HARQ-ACK feedback information is used to indicate a CBG error condition in the TB.

14. The method according to claim 4, 5 or 13, wherein,
a value of the HARQ-ACK feedback information is a first value, used to indicate that a TB is transmitted successfully;
the HARQ-ACK feedback information further comprises one or more other values, and each of the one or more other values is used to indicate at least one of:
used to indicate that one CBG fails to be transmitted;
used to indicate that two CBGs fail to be transmitted;
used to indicate that a number of CBGs that fail to be transmitted is less than or equal to a first threshold;
used to indicate that the number of CBGs that fail to be transmitted is greater than the first threshold;
used to indicate that a ratio between the number of CBGs that fail to be transmitted and a number of CBGs in the TB is less than or equal to a second threshold;
used to indicate that a ratio between the number of CBGs that fail to be transmitted and the number of CBGs in the TB is greater than the second threshold;
used to indicate a data retransmission type, the data retransmission type including retransmission based on packet coding;
used to indicate that there is a CBG error in a first half of CBGs in TB;
used to indicate that there is a CBG error in a second half of the CBGs in the TB;
used to indicate that, according to CBG indices, CBGs at an interval in the TB have errors;
used to indicate that no physical shared channel is received; or
used to indicate a TB error.

15. The method according to claim 4, 5 or 13, wherein,
a value of the HARQ-ACK feedback information is a first value, used to indicate that the TB is transmitted successfully;
a value of the HARQ-ACK feedback information is a second value, used to indicate that one CBG fails to be transmitted;
a value of the HARQ-ACK feedback information is a third value, used to indicate that two CBGs fail to be transmitted.

16. The method according to claim 4, 5 or 13, wherein,
a value of the HARQ-ACK feedback information is a first value, used to indicate that the TB is transmitted successfully;
a value of the HARQ-ACK feedback information is a second value, used to indicate that a number of CBGs that fail to be transmitted is less than or equal to a first threshold;
a value of the HARQ-ACK feedback information is a third value, used to indicate that a number of transmission failures is greater than the first threshold and a ratio between the number of CBGs that fail to be transmitted and a number of CBGs in the TB is less than or equal to a second threshold;
a value of the HARQ-ACK feedback information is a fourth value, used to indicate that the ratio between the number of CBGs that fail to be transmitted and the number of CBGs in the TB is greater than the second threshold.

17. The method according to claim 4, 5 or 13, wherein,
a value of the HARQ-ACK feedback information is a first value, used to indicate that the TB is transmitted successfully;
a value of the HARQ-ACK feedback information is a second value, used to indicate that TB transmission fails and packet coding retransmission is expected, or, used to indicate that a number of CBGs that fail to be transmitted is less than or equal to a first threshold, or, used to indicate that the number of CBGs that fail to be transmitted is 1;
a value of the HARQ-ACK feedback information is a third value, used to indicate that no physical shared channel is received;
a value of the HARQ-ACK feedback information is a fourth value, used to indicate that the TB transmission fails.

18. The method according to any one of claims 1 to 4, further comprising:
receiving second indication information sent from the second node, wherein the second indication information is used to combine with the HARQ-ACK feedback information to determine to-be-transmitted data.

19. The method according to claim 18, wherein,
a value of the second indication information is a fifth value, used to indicate that, in a case where the HARQ-ACK feedback information indicates that the TB transmission fails, it is expected that the TB retransmission comprises retransmission based on packet coding;
a value of the second indication information is a sixth value, used to indicate that, in a case where the HARQ-ACK feedback information indicates that the TB transmission fails, the TB is retransmitted.

20. The method according to claim 18, wherein,
a value of the second indication information is a seventh value, used to indicate that all CBGs in the TB are transmitted successfully;
a value of the second indication information is an eighth value, used to indicate that a number of CBGs that fail to be transmitted is less than or equal to a first threshold;
a value of the second indication information is a ninth value, used to indicate that a number of transmission failures is greater than the first threshold and a ratio between the number of CBGs that fail to be transmitted and a number of CBGs in the TB is less than or equal to a second threshold;
a value of the second indication information is a tenth value, used to indicate that the ratio between the number of CBGs that fail to be transmitted and the number of CBGs in the TB is greater than the second threshold.

21. A data transmission method, **characterized in that** the method is applied to a second node, and comprises:
receiving first indication information indicating a data transmission type;
performing data transmission with a first node based on the first indication information.

22. The method according to claim 21, wherein the performing data transmission with the first node based on the first indication information comprises:
receiving data transmitted from the first node based on the first indication information; or,
transmitting data to the second node based on the first indication information.

23. The method according to claim 21, wherein transmitting the first indication information indicating the data transmission type comprises:
the first indication information being transmitted in uplink scheduling information, or,
the first indication information being transmitted in downlink scheduling information.

24. The method according to claim 21, further comprising:
sending, by the second node, hybrid automatic repeat request, HARQ-ACK, feedback information to the first node.

25. The method according to claim 24, wherein the HARQ-ACK feedback information is used to indicate whether each code block group, CBG, in a transport block, TB, is transmitted successfully.

26. The method according to claim 21, wherein the performing the data transmission with the first node based on the first indication information comprises:
in a case where data sent from the first node is retransmission data, receiving the retransmission data sent from the first node, wherein the retransmission data comprises data obtained by the first node through packet coding on at least one CBG including a CBG that fails to be transmitted.

27. The method according to claim 26, further comprising:
decoding the retransmission data according to the first indication information, and obtaining the CBG that fails to be transmitted based on a correctly detected CBG in a previous transmission and the retransmission data.

28. The method according to claim 26, wherein the retransmission data comprising the data obtained by the first node through packet coding on at least one CBG including the CBG that fails to be transmitted comprises at least one of:
performing a packet coding operation on all CBGs in the TB, to obtain a retransmission packet;
performing the packet coding operation on a first half of the CBGs in the TB, to obtain the retransmission packet;
performing the packet coding operation on a second half of the CBGs in the TB, to obtain the retransmission packet;
performing the packet coding operation on the first half of the CBGs in the TB to obtain a first retransmission packet, and performing the packet coding operation on the second half of the CBGs in the TB to obtain a second retransmission packet;
selecting a part of CBGs in the TB and performing the packet coding operation according to indices and an interval of each CBG in the TB, to obtain the retransmission packet, wherein the interval is used to represent an absolute value of a difference between indices of two adjacent CBGs among selected part of CBGs.

29. The method according to claim 26 or 28, wherein the packet coding operation comprises at least one of: an XOR operation, an RS coding operation, an LRC coding operation.

30. The method according to any one of claims 21 to 23, wherein the first indication information comprises data retransmission type indication information and/or a CBG indication corresponding to packet coded data.

31. The method according to any one of claims 21 to 24, further comprising:
sending second indication information, wherein the second indication information is used to combine with the HARQ-ACK feedback information to determine to-be-transmitted data.

32. A communication apparatus, **characterized by** comprising: a memory and a processor; the memory and the processor are coupled; the memory is configured to store instructions executable by the processor; the processor, upon executing the instructions, performs the method according to any one of claims 1 to 31.

33. A computer-readable storage medium, **characterized in that** the computer-readable storage medium stores computer instructions, and upon the computer instructions being run on a communication apparatus, the communication apparatus is enabled to perform the method according to any one of claims 1 to 31.
